# EUROPEAN PATENT APPLICATION

(11) **EP 4 489 279 A1**
(43) Date of publication of application: **08.01.2025**
(21) Application number: 24186657.3
(22) Date of filing: 04.07.2024
(51) Int. Cl.: H02M 1/32, H02M 1/36, H02M 5/22, H02M 5/293, H02M 7/5387

(54) **POWER CONVERSION APPARATUS AND CONTROL METHOD OF STOPPING SENDING PWM DRIVER GATING SIGNAL THEREOF**

(30) Priority: 07.07.2023 CN 202310834773
(71) Applicant: Huawei Digital Power Technologies Co., Ltd., Shenzhen, Guangdong 518043 (CN)
(72) Inventor: HU, Yaowei, Shenzhen 518043 (CN); MAO, Zhu, Shenzhen 518043 (CN); ZHAO, Jun, Shenzhen 518043 (CN); ZHANG, Chengliang, Shenzhen 518043 (CN)
(74) Representative: Gill Jennings & Every LLP

(57) **Abstract**

This application provides a power conversion apparatus and a control method of stopping sending a PWM driver gating signal thereof. When the power conversion apparatus is faulty or receives a shutdown instruction, a controller controls all switching transistors in a half-bridge circuit to be turned off. Specifically, when an inductor current is not zero, a part of switching transistors in an upper half bridge arm or a lower half bridge arm that is turned on are controlled to be turned off, and all switching transistors in the lower half bridge arm or the upper half bridge arm that is turned off are controlled to be turned off. After the inductor current freewheels to approximately zero, all switching transistors of the upper half bridge arm or the lower half bridge arm that is turned on are controlled to be turned off, so that all switching transistors in the half-bridge circuit of the power conversion apparatus are turned off. When the inductor current is approximately zero, all switching transistors in an on state in the upper half bridge arm and the lower half bridge arm are controlled to be simultaneously turned off, so that all the switching transistors in the half-bridge circuit of the power conversion apparatus are turned off. In a process of stopping sending a PWM driver gating signal, driving of more switching transistors can be blocked as quickly as possible to reduce impact of an emergency or fault event.

## Description

### TECHNICAL FIELD

This application relates to the field of power electronics technologies, and in particular, to a power conversion apparatus and a control method of stopping sending a PWM driver gating signal thereof.

### BACKGROUND

For various power conversion apparatuses that are connected to a grid through a bidirectional switch on a secondary side, when the power conversion apparatuses need to be shut down or when systems are faulty, and the power conversion apparatuses need to be emergently shut down and stop sending a PWM driver gating signal, once a time sequence of stopping sending PWM driver gating signals to switching transistors that form the bidirectional switch is not appropriate, an inductor current is cut off, and consequently, a high voltage is generated at both ends of an inductor. This threatens safety of the switching transistors. For example, if all switching transistors are directly blocked to stop sending a PWM driver gating signal for protection, there is no freewheeling loop for a current inductor current, and freewheeling can be performed only through parasitic capacitors of the switching transistors. If the inductor current is large, voltage impact on the parasitic capacitors of the switching transistors is large, and the switching transistors are easily damaged due to overvoltage. For another example, if blocking is performed only when the inductor current is zero, it is needed to wait for a maximum of half a switching periodicity to perform an action, on the switching transistors on the secondary side, of stopping sending a PWM driver gating signal. In some harsh environment conditions, for example, when a lightning strike occurs on an alternating current output port, because a transient voltage reverse may occur in this case, a voltage polarity may be incorrectly determined. When the inductor current is reduced to zero, a problem that a secondary-side bridge arm is straight through may occur.

### SUMMARY

Embodiments of this application provide a power conversion apparatus and a control method of stopping sending a PWM driver gating signal thereof, to block more switching transistors as quickly as possible in a process of stopping sending a PWM driver gating signal, so as to reduce impact of an emergency or fault event.

To achieve the foregoing objective, the following technical solutions are used in this application.

According to a first aspect of embodiments of this application, a power conversion apparatus is provided, and may specifically include a transformer, an inductive device, a primary-side circuit, a secondary-side circuit, and a controller. The primary-side circuit is connected to a primary-side winding of the transformer, and the primary-side circuit is configured to convert an input direct-current voltage into a high-frequency alternating-current square-wave signal. The secondary-side circuit is connected to the inductive device in series and is then connected to a secondary-side winding of the transformer. The secondary-side circuit is configured to convert the high-frequency alternating-current square-wave signal into an alternating-current voltage for output. The secondary-side circuit may include a half-bridge circuit. The half-bridge circuit may include a bridge arm and a first capacitor. The bridge arm includes an upper half bridge arm and a lower half bridge arm. The upper half bridge arm or the lower half bridge arm includes two switching transistors of which freewheeling directions are opposite. A connection point between the upper half bridge arm and the lower half bridge arm is connected to one end of the secondary-side winding of the transformer through the inductive device. The first capacitor is connected between the upper half bridge arm (or the lower half bridge arm) and the other end of the secondary-side winding of the transformer. In some other embodiments of this application, the half-bridge circuit may further include a second capacitor. The first capacitor and the second capacitor are connected in series and then are disposed in parallel to the bridge arm. A connection point between the first capacitor and the second capacitor is connected to the other end of the secondary-side winding of the transformer.

Both the primary-side circuit and the secondary-side circuit in the power conversion apparatus according to this embodiment of this application are controlled by the controller. When the power conversion apparatus is faulty or receives a shutdown instruction, the controller may control all switching transistors in the half-bridge circuit to be turned off, to complete an operation of stopping sending a PWM driver gating signal. Specifically, when determining that a current flowing through the inductive device is greater than or equal to a set negative current threshold and is less than or equal to a set positive current threshold, the controller may control all switching transistors in an on state in the upper half bridge arm and the lower half bridge arm to be simultaneously turned off, so that all switching transistors in the half-bridge circuit of the power conversion apparatus are turned off. When determining that a current flowing through the inductive device is less than a set negative current threshold or greater than a set positive current threshold, the controller may control a part of switching transistors in the upper half bridge arm or the lower half bridge arm that is turned on to be turned off and control all switching transistors in the lower half bridge arm or the upper half bridge arm that is turned off to be turned off. Then, when determining that the current flowing through the inductive device is greater than or equal to the set negative current threshold and less than or equal to the set positive current threshold, the controller may control all switching transistors of the upper half bridge arm or the lower half bridge arm that is turned on to be turned off, so that all switching transistors in the half-bridge circuit of the power conversion apparatus are turned off.

When determining that the power conversion apparatus is faulty or receives the shutdown instruction, the controller of the power conversion apparatus according to this embodiment of this application immediately turns off all switching transistors that do not affect a freewheeling channel, and a switching transistor on the freewheeling channel is turned off after the current freewheels to approximately zero. In an entire control process of stopping sending a PWM driver gating signal, because at most one switching transistor that is of the switching transistors of the secondary-side circuit and that needs to maintain the freewheeling channel is turned on, a problem that an impact range is expanded due to a fault or another event can be effectively prevented, and safety of the entire circuit is ensured by stopping sending a PWM driver gating signal.

In some embodiments of this application, the upper half bridge arm of the converter may include a sixth switching transistor and an eighth switching transistor that are connected in series, and the lower half bridge arm may include a fifth switching transistor and a seventh switching transistor that are connected in series. Freewheeling directions of the fifth switching transistor and the sixth switching transistor both point to the connection point between the upper half bridge arm and the lower half bridge arm, and freewheeling directions of the seventh switching transistor and the eighth switching transistor are both away from the connection point between the upper half bridge arm and the lower half bridge arm.

In some embodiments of this application, the sixth switching transistor may be connected between the eighth switching transistor and the inductive device. In some other embodiments of this application, the eighth switching transistor may alternatively be connected between the sixth switching transistor and the inductive device.

In some embodiments of this application, the fifth switching transistor may be connected between the seventh switching transistor and the inductive device. In some other embodiments of this application, the seventh switching transistor may alternatively be connected between the fifth switching transistor and the inductive device.

In some embodiments of this application, when the controller determines that the current flowing through the inductive device is greater than or equal to the set negative current threshold and less than or equal to the set positive current threshold, the controller may control the fifth switching transistor, the sixth switching transistor, the seventh switching transistor, and the eighth switching transistor to be simultaneously turned off.

In some embodiments of this application, when the controller determines that the current flowing through the inductive device is greater than the set positive current threshold, the controller may control the sixth switching transistor to remain on, control other switching transistors in the half-bridge circuit to be turned off, and then in response to that the current flowing through the inductive device is greater than or equal to the set negative current threshold and less than or equal to the set positive current threshold, control the sixth switching transistor to be turned off.

In some embodiments of this application, when the controller determines that the current flowing through the inductive device is greater than the set positive current threshold, the controller may control the fifth switching transistor to remain on, control other switching transistors in the half-bridge circuit to be turned off, and then in response to that the current flowing through the inductive device is greater than or equal to the set negative current threshold and less than or equal to the set positive current threshold, control the fifth switching transistor to be turned off.

In some embodiments of this application, when the controller determines that the current flowing through the inductive device is less than the set negative current threshold, the controller may control the eighth switching transistor to remain on, control other switching transistors in the half-bridge circuit to be turned off, and then in response to that the current flowing through the inductive device is greater than or equal to the set negative current threshold and less than or equal to the set positive current threshold, control the eighth switching transistor to be turned off.

In some embodiments of this application, when the controller determines that the current flowing through the inductive device is less than the set negative current threshold, the controller may control the seventh switching transistor to remain on, control other switching transistors in the half-bridge circuit to be turned off, and then in response to that the current flowing through the inductive device is greater than or equal to the set negative current threshold and less than or equal to the set positive current threshold, control the seventh switching transistor to be turned off.

According to a second aspect of embodiments of this application, a control method of stopping sending a PWM driver gating signal for a power conversion apparatus is provided. For a specific structure of the power conversion apparatus, refer to the first aspect of embodiments of this application. Details are not described herein. The control method of stopping sending of a PWM driver gating signal specifically includes the following steps.

When the power conversion apparatus is faulty or receives a shutdown instruction, all switching transistors in a half-bridge circuit of the power conversion apparatus may be controlled to be turned off. Specifically, when it is determined that a current flowing through an inductive device is greater than or equal to a set negative current threshold and is less than or equal to a set positive current threshold, all switching transistors in an on state in an upper half bridge arm and a lower half bridge arm may be controlled to be simultaneously turned off, so that all switching transistors in the half-bridge circuit of the power conversion apparatus are turned off. When it is determined that a current flowing through an inductive device is less than a set negative current threshold or greater than a set positive current threshold, a part of switching transistors in an upper half bridge arm or a lower half bridge arm that is turned on may be controlled to be turned off, and all switching transistors in the lower half bridge arm or the upper half bridge arm that is turned off may be controlled to be turned off; and then in response to that the current flowing through the inductive device is greater than or equal to the set negative current threshold and less than or equal to the set positive current threshold, all switching transistors of the upper half bridge arm or the lower half bridge arm that is turned on are controlled to be turned off, so that all switching transistors in the half-bridge circuit of the power conversion apparatus are turned off.

In the control method of stopping sending a PWM driver gating signal according to this embodiment of this application, when it is determined that the power conversion apparatus is faulty or receives the shutdown instruction, all switching transistors that do not affect a freewheeling channel are immediately turned off, and a switching transistor on the freewheeling channel is turned off after the current freewheels to approximately zero. In an entire control process of stopping sending a PWM driver gating signal, because at most one switching transistor that is of the switching transistors of the secondary-side circuit and that needs to maintain the freewheeling channel is turned on, a problem that an impact range is expanded due to a fault or another event can be effectively prevented, and safety of the entire circuit is ensured by stopping sending a PWM driver gating signal.

For technical effect that can be achieved in the second aspect, refer to the descriptions of technical effect that can be achieved by any possible design in the first aspect. Details are not described herein again.

### BRIEF DESCRIPTION OF DRAWINGS

FIG. 1a is a diagram of a structure of a power conversion apparatus according to an embodiment of this application;
FIG. 1b is a diagram of another structure of a power conversion apparatus according to an embodiment of this application;
FIG. 2a is a schematic of a circuit structure of a power conversion apparatus according to an embodiment of this application;
FIG. 2b is a schematic of another circuit structure of a power conversion apparatus according to an embodiment of this application;
FIG. 2c is a schematic of another circuit structure of a half-bridge circuit in a power conversion apparatus according to an embodiment of this application;
FIG. 3 is a schematic flowchart of a control method of stopping sending a PWM driver gating signal for a power conversion apparatus according to an embodiment of this application;
FIG. 4 is a schematic of a structure of an inductor current sampling and zero-crossing detection circuit of a power conversion apparatus according to an embodiment of this application;
FIG. 5 is a schematic of another structure of an inductor current sampling and zero-crossing detection circuit of a power conversion apparatus according to an embodiment of this application;
FIG. 6 is a schematic of alternating current voltage partitioning ranges in a power conversion apparatus according to an embodiment of this application;
FIG. 7a is a schematic of a turn-off sequence of switching transistors in a control method of stopping sending a PWM driver gating signal for a power conversion apparatus according to an embodiment of this application;
FIG. 7b is a schematic of another turn-off sequence of switching transistors in a control method of stopping sending a PWM driver gating signal for a power conversion apparatus according to an embodiment of this application;
FIG. 8a is a schematic of another turn-off sequence of switching transistors in a control method of stopping sending a PWM driver gating signal for a power conversion apparatus according to an embodiment of this application;
FIG. 8b is a schematic of another turn-off sequence of switching transistors in a control method of stopping sending a PWM driver gating signal for a power conversion apparatus according to an embodiment of this application;
FIG. 9a is a schematic of another turn-off sequence of switching transistors in a control method of stopping sending a PWM driver gating signal for a power conversion apparatus according to an embodiment of this application;
FIG. 9b is a schematic of another turn-off sequence of switching transistors in a control method of stopping sending a PWM driver gating signal for a power conversion apparatus according to an embodiment of this application;
FIG. 10a is a schematic of another turn-off sequence of switching transistors in a control method of stopping sending a PWM driver gating signal for a power conversion apparatus according to an embodiment of this application;
FIG. 10b is a schematic of another turn-off sequence of switching transistors in a control method of stopping sending a PWM driver gating signal for a power conversion apparatus according to an embodiment of this application;
FIG. 11a is a schematic of another turn-off sequence of switching transistors in a control method of stopping sending a PWM driver gating signal for a power conversion apparatus according to an embodiment of this application;
FIG. 11b is a schematic of another turn-off sequence of switching transistors in a control method of stopping sending a PWM driver gating signal for a power conversion apparatus according to an embodiment of this application;
FIG. 12a is a schematic of another turn-off sequence of switching transistors in a control method of stopping sending a PWM driver gating signal for a power conversion apparatus according to an embodiment of this application;
FIG. 12b is a schematic of another turn-off sequence of switching transistors in a control method of stopping sending a PWM driver gating signal for a power conversion apparatus according to an embodiment of this application;
FIG. 13a is a schematic of another turn-off sequence of switching transistors in a control method of stopping sending a PWM driver gating signal for a power conversion apparatus according to an embodiment of this application;
FIG. 13b is a schematic of another turn-off sequence of switching transistors in a control method of stopping sending a PWM driver gating signal for a power conversion apparatus according to an embodiment of this application;
FIG. 14a is a schematic of another turn-off sequence of switching transistors in a control method of stopping sending a PWM driver gating signal for a power conversion apparatus according to an embodiment of this application;
FIG. 14b is a schematic of another turn-off sequence of switching transistors in a control method of stopping sending a PWM driver gating signal for a power conversion apparatus according to an embodiment of this application;
FIG. 15 is a schematic of another turn-off sequence of switching transistors in a control method of stopping sending a PWM driver gating signal for a power conversion apparatus according to an embodiment of this application;
FIG. 16 is a schematic of another turn-off sequence of switching transistors in a control method of stopping sending a PWM driver gating signal for a power conversion apparatus according to an embodiment of this application;
FIG. 17a is a schematic of another turn-off sequence of switching transistors in a control method of stopping sending a PWM driver gating signal for a power conversion apparatus according to an embodiment of this application;
FIG. 17b is a schematic of another turn-off sequence of switching transistors in a control method of stopping sending a PWM driver gating signal for a power conversion apparatus according to an embodiment of this application;
FIG. 17c is a schematic of another turn-off sequence of switching transistors in a control method of stopping sending a PWM driver gating signal for a power conversion apparatus according to an embodiment of this application; and
FIG. 17d is a schematic of another turn-off sequence of switching transistors in a control method of stopping sending a PWM driver gating signal for a power conversion apparatus according to an embodiment of this application.

### DESCRIPTION OF EMBODIMENTS

The following describes the technical solutions in embodiments of this application with reference to the accompanying drawings in embodiments of this application. It is clearly that the described embodiments are merely some rather than all of embodiments of this application.

The terms "second", "first", and the like mentioned below are merely intended for ease of description, and shall not be understood as an indication or implication of relative importance or an implicit indication of a quantity of indicated technical features. Therefore, a feature limited by "second ", "first", or the like may explicitly indicate or implicitly include one or more such features. In descriptions of this application, unless otherwise specified, "a plurality of" means two or more than two.

In addition, in embodiments of this application, orientation terms such as "up", "down", "left", and "right" may include but are not limited to orientations of components schematically placed in the accompanying drawings. It should be understood that these orientation terms may be relative concepts. The orientation terms are used for relative description and clarification, and may vary correspondingly based on a change in an orientation in which the component is placed in the accompanying drawings.

In embodiments of this application, unless otherwise clearly specified and limited, a term "connection" should be understood in a broad sense. For example, a "connection" may be a fixed connection, a detachable connection, or an integrated connection, may be a direct connection, or may be an indirect connection through an intermediate medium. In addition, a term "coupling" may be a direct electrical connection, or may be an indirect electrical connection through an intermediate medium. A term "contact" may be direct contact, or may be indirect contact through an intermediate medium.

In embodiments of this application, a term "and/or" describes an association relationship between associated objects and indicates that three relationships may exist. For example, A and/or B may indicate the following cases: Only A exists, both A and B exist, and only B exists, where A and B may be singular or plural. A character"/" generally indicates an "or" relationship between the associated objects.

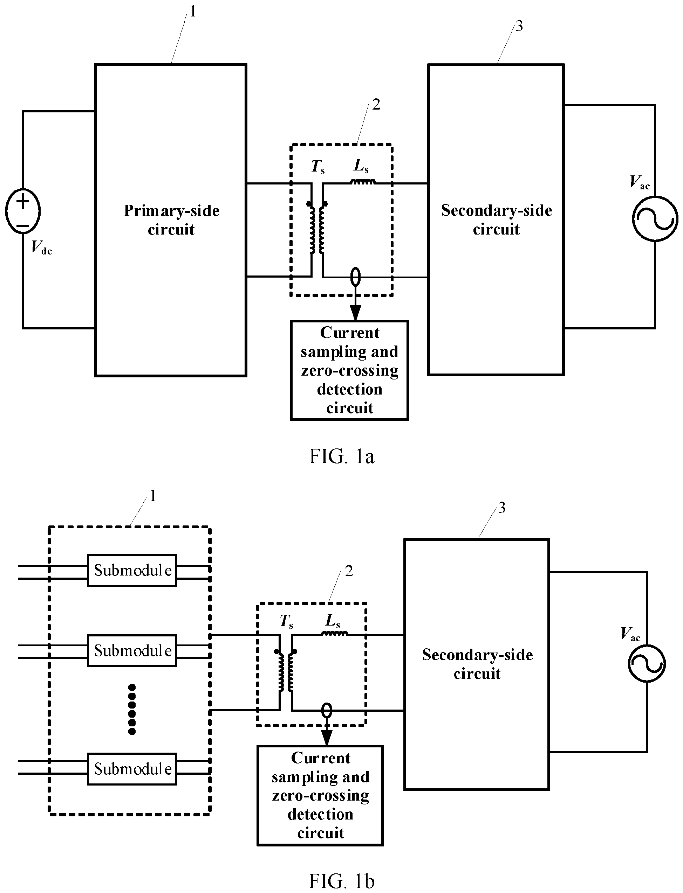

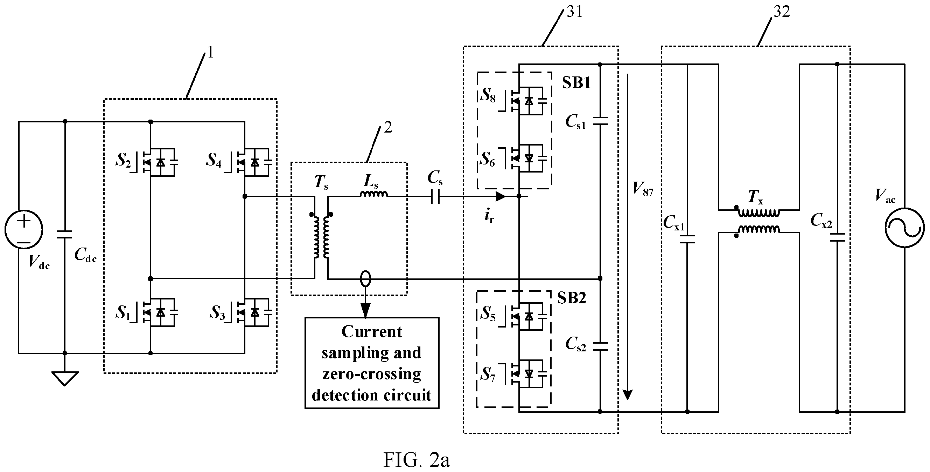

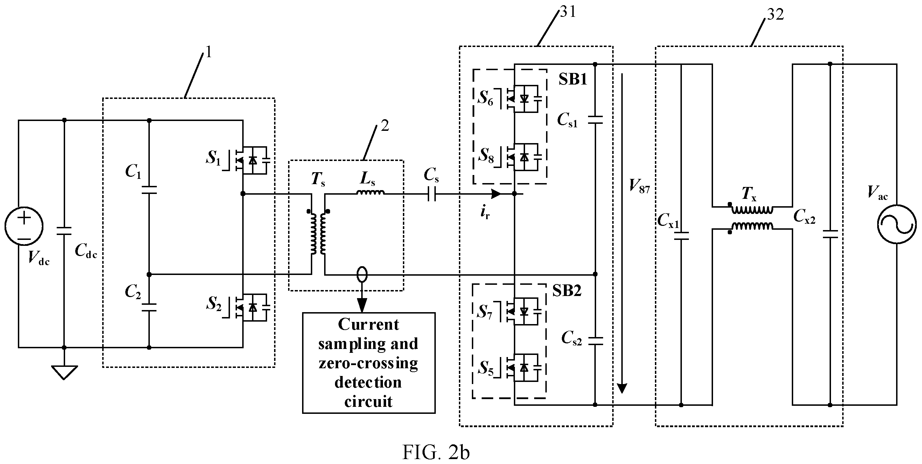

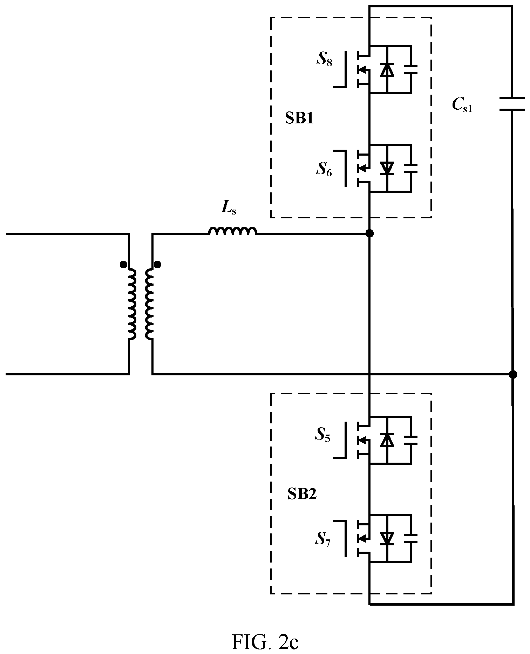

FIG. 1a is an example of a diagram of a structure of a power conversion apparatus according to an embodiment of this application. FIG. 1b is an example of a diagram of another structure of the power conversion apparatus according to an embodiment of this application. FIG. 2a is an example of a schematic of a circuit structure of the power conversion apparatus according to an embodiment of this application. FIG. 2b is an example of a schematic of another circuit structure of the power conversion apparatus according to an embodiment of this application. FIG. 2c is an example of a schematic of another circuit structure of a half-bridge circuit in the power conversion apparatus according to an embodiment of this application.

Refer to FIG. 1a. The power conversion apparatus according to an embodiment of this application may specifically include a transformer 2, an inductive device *L*ₛ, a primary-side circuit 1, a secondary-side circuit 3, and a controller (not shown in the figure). The power conversion apparatus according to this embodiment of this application may be specifically applicable to a single-stage isolated inverter. The power conversion apparatus according to this embodiment of this application may be used in an energy storage system, or may be used in a charging pile, or may be used in another device that needs to perform an inversion operation. This is not limited herein.

One end of the primary-side circuit 1 is configured to input a direct current voltage *V*_{dc}, and the other end of the primary-side circuit 1 is connected to a primary-side winding of the transformer 2. The primary-side circuit 1 is configured to convert the input direct current voltage *V*_{dc} into a high-frequency alternating-current square-wave signal. Refer to FIG. 1b. The primary-side circuit 1 may alternatively be derived from a plurality of submodules connected in series or in parallel, where each submodule may be a half-bridge circuit or a full-bridge circuit. Refer to FIG. 2a. The primary-side circuit 1 may alternatively be a full-bridge circuit including a first switching transistor *S*₁, a second switching transistor *S*₂, a third switching transistor *S*₃, and a fourth switching transistor *S*₄. Refer to FIG. 2b. The primary-side circuit 1 may alternatively be a half-bridge circuit including a first switching transistor *S*₁, a second switching transistor *S*₂, a first bridge arm capacitor *C*₁, and a second bridge arm capacitor *C*₂, or the primary-side circuit 1 may be any other circuit that can convert a direct current into a high-frequency alternating-current square-wave signal.

The transformer 2 may be designed as a transformer whose secondary-side leakage inductance has a value equal to *L*ₛ, so that the inductive device *L*ₛ connected in series to a secondary-side winding of the transformer 2 may be the secondary-side leakage inductance of the transformer 2. Alternatively, refer to FIG. 1a and FIG. 1b. The transformer 2 may be designed as a transformer with a small leakage inductance, and the inductive device *L*ₛ connected in series is separately disposed. Refer to FIG. 2a and FIG. 2b. The secondary-side circuit 3 may further include a capacitor *C*ₛ connected in series to the inductive device *L*ₛ, and the capacitor *C*ₛ is used as a direct current blocking capacitor or a resonant capacitor.

One end of the secondary-side circuit 3 is configured to output an alternating current voltage *V*_{ac}, and the other end of the secondary-side circuit 3 is connected in series to the inductive device *L*ₛ and is then connected to the secondary-side winding of the transformer 2. The secondary-side circuit 3 is configured to convert a high-frequency alternating-current square-wave signal into an alternating current voltage *V*_{ac} for output. Refer to FIG. 2a to FIG. 2c. The secondary-side circuit 3 may include a half-bridge circuit 31. FIG. 2a to FIG. 2c are merely examples for describing a possible implementation structure of a filter circuit 32, and the implementation structure is not limited thereto. The half-bridge circuit 31 may include a bridge arm. The bridge arm includes an upper half bridge arm and a lower half bridge arm. The upper half bridge arm may include a bidirectional switch SB1. The lower half bridge arm may include a bidirectional switch SB2. Both the upper half bridge arm and the lower half bridge arm include two switching transistors whose freewheeling directions are opposite. A connection point between the two bidirectional switches SB1 and SB2, that is, a connection point between the upper half bridge arm and the lower half bridge arm, serves as a midpoint of the bridge arm, and may be connected in series to the inductive device *L*ₛ and then connected to one end of the secondary-side winding of the transformer 2. Refer to FIG. 2a and FIG. 2b. The half-bridge circuit 31 may further include a first capacitor *C*ₛ₁ and a second capacitor *C*ₛ₂. The first capacitor *C*ₛ₁ and the second capacitor *C*ₛ₂ are connected in series and are then disposed in parallel to the bridge arm. A connection point between the first capacitor *C*ₛ₁ and the second capacitor *C*ₛ₂ is connected to the other end of the secondary-side winding of the transformer. Alternatively, refer to FIG. 2c. The half-bridge circuit 31 may include only a first capacitor *C*ₛ₁. The first capacitor *C*ₛ₁ is connected between the upper half bridge arm (or the lower half bridge arm) and the other end of the secondary-side winding of the transformer. The secondary-side circuit 3 may further include the filter circuit 32. One side of the filter circuit 32 is connected to the half-bridge circuit 31, and the other side is connected to an output end of the alternating current voltage *V*_{ac}. The filter circuit 32 may be a single-stage or multi-stage filter. FIG. 2a and FIG. 2b are merely examples for describing a possible implementation structure of the filter circuit 32, and the implementation structure is not limited thereto. Refer to FIG. 2a and FIG. 2b. For example, the filter circuit 32 may include a third capacitor *C*ₓ₁ connected in parallel to the bridge arm, a fourth capacitor *C*ₓ₂ connected in parallel to the output end of the alternating current voltage *V*_{ac}, and a filter transformer *T*ₓ connected between the third capacitor *C*ₓ₁ and the fourth capacitor *C*ₓ₂.

The switching transistor in the secondary-side circuit 3 may be specifically a metal-oxide-semiconductor field-effect transistor (metal-oxide-semiconductor field-effect transistor, MOSFET), or may be an insulated gate bipolar transistor (insulated gate bipolar transistor, IGBT), a gallium nitride (gallium nitride, GaN) high electron mobility transistor (high electron mobility transistor, HEMT), or the like. Specifically, the upper half bridge arm or the lower half bridge arm may include two discretely disposed switching transistors, or may include a module in which two switching transistors are integrated, or may include a monolithic bidirectional (on or off) device (for example, a monolithic bidirectional GaN device). For example, the upper half bridge arm includes an eighth switching transistor *S*₈ and a sixth switching transistor *S*₆ that are connected in series, and the lower half bridge arm includes a fifth switching transistor *S*₅ and a seventh switching transistor *S*₇ that are connected in series. Specifically, it may be defined as follows: Two ports that are of each switching transistor and that are connected to a power loop are a port 1 and a port 2 respectively. When the switching transistor is turned on, a current may flow in from the port 1 and flow out from the port 2, or may flow in from the port 2 and flow out from the port 1. When the switching transistor is in a freewheeling state, the current flows in from the port 2 and flows out from the port 1. It may be defined as follows: freewheeling directions of the fifth switching transistor *S*₅ and the sixth switching transistor *S*₆ both point to the connection point between the upper half bridge arm and the lower half bridge arm, and freewheeling directions of the seventh switching transistor *S*₇ and the eighth switching transistor *S*₈ are both away from the connection point between the upper half bridge arm and the lower half bridge arm. In a half bridge arm, a switching transistor connected to one end of the secondary-side winding may be defined as an inner switching transistor, a switching transistor connected to the alternating current voltage *V*_{ac} may be defined as an outer switching transistor, and the inner switching transistor is connected between the outer switching transistor and the inductive device *L*ₛ (which may also be considered as the connection point between the upper half bridge arm and the lower half bridge arm). Refer to FIG. 2a. In the half bridge arm, a port 2 of the outer switching transistor may be connected to a port 1 of the inner switching transistor, so that freewheeling directions of two switching transistors in one half bridge arm both point to a direction away from a connection point between the two switching transistors. To be specific, in FIG. 2a, the fifth switching transistor *S*₅ and the sixth switching transistor *S*₆ are inner switching transistors, and the seventh switching transistor *S*₇ and the eighth switching transistor *S*₈ are outer switching transistors. Alternatively, refer to FIG. 2b. In the half bridge arm, a port 1 of the outer switching transistor may be connected to a port 2 of the inner switching transistor, so that the freewheeling directions of the two switching transistors in one half bridge arm both point to a direction of a connection point between the two switching transistors. To be specific, in FIG. 2b, the fifth switching transistor *S*₅ and the sixth switching transistor *S*₆ are outer switching transistors, and the seventh switching transistor *S*₇ and the eighth switching transistor *S*₈ are inner switching transistors. In addition, the switching transistors in the two half bridge arms in the half-bridge circuit 31 may be connected in a same manner, or may be connected in different manners. For example, the switching transistors in the upper half bridge arm are connected based on a topology structure shown in FIG. 2a, and the switching transistors in the lower half bridge arm are connected based on a topology structure shown in FIG. 2b.

Both the primary-side circuit 1 and the secondary-side circuit 3 in the power conversion apparatus according to this embodiment of this application are controlled by the controller. When the power conversion apparatus needs to be shut down or when a system is faulty, and the power conversion apparatus needs to be emergently shut down and stop sending a PWM driver gating signal, the controller is configured to control switching transistors in the primary-side circuit 1 and the secondary-side circuit 3 to be turned off in batches. Specifically, to control an output voltage and output power, the alternating current voltage *V*_{ac} is sampled. Because a one-stage or multi-stage filter circuit 32 exists between the alternating current voltage *V*_{ac} and a voltage *V*₈₇ at two ends of the seventh switching transistor *S*₇ and the eighth switching transistor *S*₈, a phase difference and an amplitude difference exist between the alternating current voltage *V*_{ac} and the voltage *V*₈₇ at the two ends of the seventh switching transistor *S*₇ and the eighth switching transistor *S*₈. When the alternating current voltage *V*_{ac} is small, a polarity of the voltage *V*₈₇ at the two ends of the seventh switching transistor *S*₇ and the eighth switching transistor *S*₈ cannot be accurately determined based on the detected *V*_{ac}. Once the polarity of the voltage *V*₈₇ at the two ends of the seventh switching transistor *S*₇ and the eighth switching transistor *S*₈ is incorrectly determined, the two bidirectional switches may be both turned off or turned on in a process of stopping sending a PWM driver gating signal, and consequently, a current *i*ᵣ has no freewheeling channel, or the switching transistors in the secondary-side circuit are straight-through. This causes damage to the switching transistors.

Therefore, to implement safe logic of stopping sending a PWM driver gating signal and to block more switching transistors as quickly as possible in a process of stopping sending a PWM driver gating signal, so as to reduce impact of an emergency or fault event, the controller in the power conversion apparatus according to this embodiment of this application may perform a control operation of stopping sending a PWM driver gating signal in response to that the power conversion apparatus is faulty or receives a shutdown instruction. In the process of stopping sending a PWM driver gating signal, for the primary-side circuit, all switching transistors in the primary-side circuit may be directly controlled to be turned off. In the process of stopping sending a PWM driver gating signal, for the secondary-side circuit, a path of a current freewheeling channel may be determined based on the current *i*ᵣ flowing through the inductive device with reference to working statuses of switching transistors in different phases when the switching transistors normally operate and output a voltage, to quickly turn off all switching transistors that do not affect the freewheeling channel. Only a switching transistor that is in the freewheeling channel and that has a freewheeling direction opposite to a current direction is turned on. After current freewheeling ends, the last switching transistor is turned off, so that safer logic of stopping sending a PWM driver gating signal is implemented. Specifically, the controller of the power conversion apparatus according to this embodiment of this application may perform the following control method of stopping sending a PWM driver gating signal.

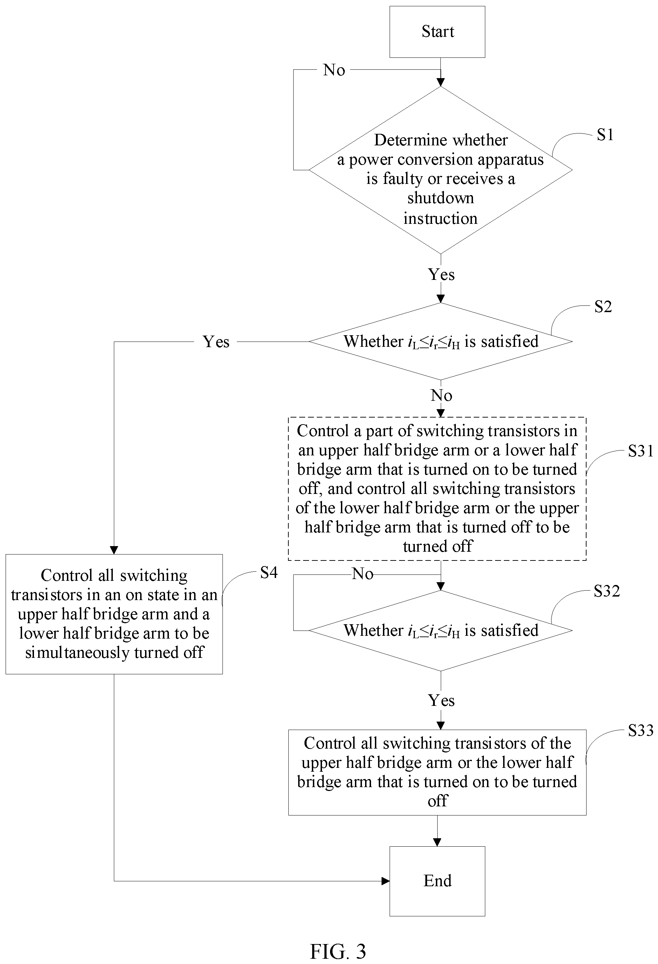

FIG. 3 is an example of a schematic flowchart of a control method of stopping sending a PWM driver gating signal for a power conversion apparatus according to an embodiment of this application.

Refer to FIG. 3. The control method of stopping sending a PWM driver gating signal for the power conversion apparatus according to this embodiment of this application may include the following steps.

S1: Determine whether the power conversion apparatus is faulty or receives a shutdown instruction. In other words, whether the power conversion apparatus needs to perform a control operation of stopping sending a PWM driver gating signal is determined. A fault that occurs in the power conversion apparatus may be, for example, an overcurrent surge of a current. Occurrence of such faults may damage switching transistors inside the power conversion apparatus and affect normal working of the switching transistors. Therefore, control of stopping sending a PWM driver gating signal needs to be performed, to be specific, for a primary-side circuit, all switching transistors in the primary-side circuit need to be directly controlled to be turned off, and for a secondary-side circuit, all switching transistors in a half-bridge circuit need to be controlled to be turned off. When it is determined that the power conversion apparatus is faulty or receives the shutdown instruction, the following steps S2 to S4 may be performed for the secondary-side circuit.

S2: Determine whether a current *i*ᵣ flowing through an inductive device is greater than or equal to a set negative current threshold *i*_{L} and less than or equal to a set positive current threshold *i*_{H}, that is, whether *i*_{L}≤*i*ᵣ≤*i*_{H} is satisfied. Absolute values of the set negative current threshold *i*_{L} and the set positive current threshold *i*_{H} may be the same or different. This is not limited herein. When it is determined that *i*_{L}≤*i*ᵣ≤*i*_{H} is satisfied, it may be considered that the current *i*ᵣ flowing through the inductive device is approximately zero, and step S4 may be performed. Otherwise, steps S31 to S33 are performed. Specifically, when it is determined that *i*_{L}>*i*ᵣ is satisfied, it may be considered that the current *i*ᵣ flowing through the inductive device is negative; and when it is determined that *i*ᵣ>*i*_{H} is satisfied, it may be considered that the current *i*ᵣ flowing through the inductive device is positive.

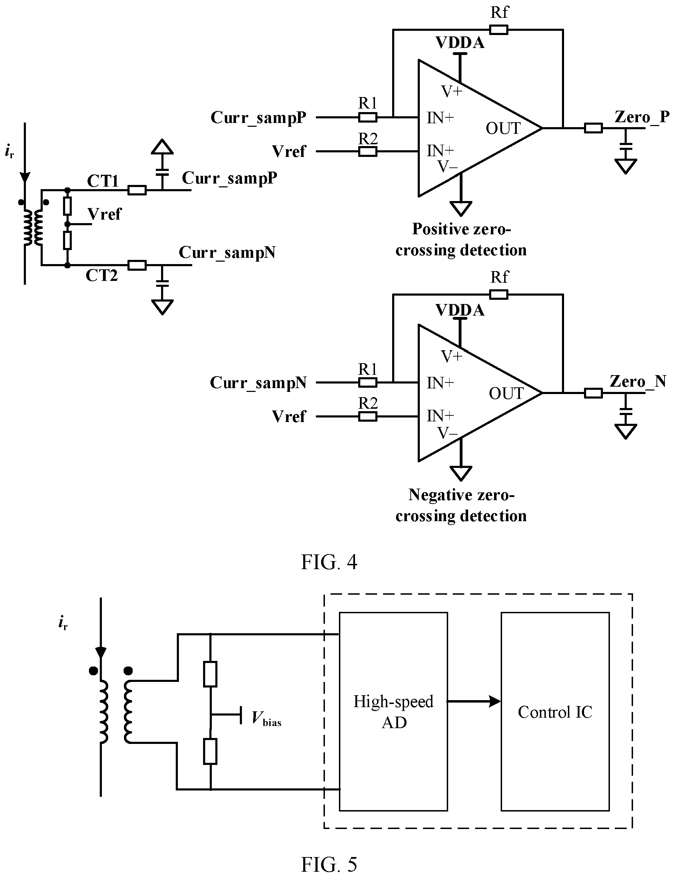

FIG. 4 is an example of a schematic of a structure of an inductor current sampling and zero-crossing detection circuit of the power conversion apparatus according to an embodiment of this application. FIG. 5 is an example of a schematic of another structure of the inductor current sampling and zero-crossing detection circuit of the power conversion apparatus according to an embodiment of this application.

Refer to FIG. 4. When a polarity of the current *i*ᵣ is detected, the current *i*ᵣ may be first sampled by using a CT, and then the polarity of the current *i*ᵣ is determined by using two hysteresis comparator circuits. Refer to Table 1.

**Table 1**

| | | |
|---|---|---|
| Current *i*ᵣ | Zero_P is used to detect positive zero-crossing of the current | |
| | Zero_N is used to detect negative zero-crossing of the current | |
| | The current *i*ᵣ is positive | Zero_P=1, Zero_N=0 |
| | The current *i*ᵣ is negative | Zero_P=0, Zero_N=1 |
| | The current *i*ᵣ is approximately zero (freewheels to zero) | Zero_P=1, Zero_N=1 |
| | | Zero_P=0, Zero_N=0 |

Refer to FIG. 5. When the polarity of the current *i*ᵣ is detected, the current *i*ᵣ may also be first sampled by using the CT, then a current signal obtained through sampling in real time is sent to a control IC by using a highspeed AD, and the polarity of the current *i*ᵣ is determined by using a program in the control IC. In addition, the highspeed AD may be a discrete AD chip, or may be an on-chip peripheral AD integrated in the control IC.

In this embodiment of this application, based on a current sampling requirement, the CT used for current *i*ᵣ sampling may be further designed to be integrated with a transformer, to reduce a volume and costs.

S31: Control a part of switching transistors in an upper half bridge arm or a lower half bridge arm that is turned on to be turned off, and control all switching transistors of the lower half bridge arm or the upper half bridge arm that is turned off to be turned off. Specifically, based on a direction of the current flowing through the inductive device, a switching transistor of which a freewheeling direction of the current of the inductive device in a freewheeling loop of the half-bridge circuit is opposite to the current direction may be controlled to remain on, to ensure that the current can freewheel, and other switching transistors in the half-bridge circuit are controlled to be turned off.

It should be noted that, at a moment when the power conversion apparatus is faulty or receives the shutdown instruction and needs to perform the control operation of stopping sending a PWM driver gating signal, in the half-bridge circuit, there may be different turn-on cases of the switching transistors. If only one switching transistor is turned on at the moment, step S31 is not performed, in other words, step S31 is an optional step. If two or three switching transistors are turned on at the moment, step S31 is performed.

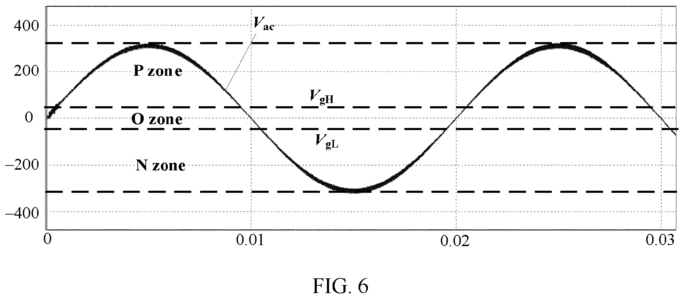

FIG. 6 is an example of a schematic of alternating current voltage partitioning ranges in the power conversion apparatus according to an embodiment of this application.

Because working statuses of the switching transistors are different in different phases of the alternating current voltage *V*_{ac} output by the power conversion apparatus, logic of stopping sending a PWM driver gating signal at a corresponding moment is affected. Therefore, the alternating current voltage *V*_{ac} may be partitioned based on a set positive voltage threshold *V*_{gH} and a set negative voltage threshold *V*_{gL}. Absolute values of the set positive voltage threshold *V*_{gH} and set negative voltage threshold *V*_{gL} may be the same or different. This is not limited herein. Refer to FIG. 6. When it is determined that *V*_{ac}>*V*_{gH} is satisfied, it may be determined that the alternating current voltage *V*_{ac} belongs to a P zone. When it is determined that *V*_{gL}>*V*_{ac} is satisfied, it may be determined that the alternating current voltage *V*_{ac} belongs to an N zone. When it is determined that *V*_{gL}≤*V*_{ac}≤*V*_{gH} is satisfied, it may be determined that the alternating current voltage *V*_{ac} belongs to an O zone. When it is determined that the alternating current voltage *V*_{ac} belongs to the P zone or the N zone, it indicates that a polarity of the alternating current voltage *V*_{ac} can be accurately determined. A topology of the half-bridge circuit shown in FIG. 2a is used as an example. In a positive half cycle of the alternating current voltage *V*_{ac}, a fifth switching transistor *S*₅ and an eighth switching transistor *S*₈ are turned on in a specific dead zone in a complementary manner to perform a switching action, and a sixth switching transistor *S*₆ and a seventh switching transistor *S*₇ are normally on. In a specific dead zone in a negative half cycle of the alternating current voltage *V*_{ac}, the sixth switching transistor *S*₆ and the seventh switching transistor *S*₇ are turned on in a complementary manner to perform the switching action, and the fifth switching transistor *S*₅ and the eighth switching transistor *S*₈ are normally on. When it is determined that the alternating current voltage *V*_{ac} belongs to the O area, it indicates that the polarity of the alternating current voltage *V*_{ac} cannot be accurately determined. Therefore, the two half bridge arms may be turned on in a complementary manner to perform the switching action in a specific dead zone. Table 2 lists all possible on/off states of the switching transistors of the half-bridge circuit at the moment of the control operation of stopping sending a PWM driver gating signal.

**Table 2**

| | Eighth switching transistor *S*₈ | Sixth switching transistor *S*₆ | Fifth switching transistor *S*₅ | Seventh switching transistor *S*₇ | Quantity of turned-on transistors |
|---|---|---|---|---|---|
| P zone | On | On | Off | On | 3 |
| | Off | On | Off | On | 2 |
| | Off | On | On | On | 3 |
| N zone | On | On | On | Off | 3 |
| | On | Off | On | Off | 2 |
| | On | Off | On | On | 3 |
| O zone | On | On | Off | Off | 2 |
| | Off | Off | Off | Off | 0 |
| | Off | Off | On | On | 2 |
| | On | Off | Off | On | 2 |
| | Off | On | On | Off | 2 |
| | On | Off | Off | Off | 1 |
| | Off | On | Off | Off | 1 |
| | Off | Off | On | Off | 1 |
| | Off | Off | Off | On | 1 |

S32: Determine whether the current *i*ᵣ flowing through the inductive device is greater than or equal to the set negative current threshold *i*_{L} and less than or equal to the set positive current threshold *i*_{H}, that is, whether *i*_{L}≤*i*ᵣ≤*i*_{H} is satisfied. When it is determined that *i*_{L}≤*i*ᵣ≤*i*_{H} is satisfied, it may be considered that the current *i*ᵣ flowing through the inductive device is approximately zero, and step S33 may be performed. Otherwise, step S32 is continuously performed until it is determined that *i*_{L}≤*i*ᵣ≤*i*_{H} is satisfied.

S33: Control all switching transistors of the upper half bridge arm or the lower half bridge arm that is turned on to be turned off, that is, control one remaining switching transistor in the half-bridge circuit to be turned off, so that all switching transistors in the half-bridge circuit of the power conversion apparatus are turned off, and the control operation of stopping sending a PWM driver gating signal is completed.

S4: Control all switching transistors in an on state in the upper half bridge arm and the lower half bridge arm to be simultaneously turned off, so that all switching transistors in the half-bridge circuit of the power conversion apparatus are turned off, and the control operation of stopping sending a PWM driver gating signal is completed.

In the control method of stopping sending a PWM driver gating signal according to this embodiment of this application, when it is determined that the power conversion apparatus is faulty or receives the shutdown instruction, all switching transistors that do not affect a freewheeling channel are immediately turned off, and a switching transistor on the freewheeling channel is turned off after the current freewheels to approximately zero. In an entire control process of stopping sending a PWM driver gating signal, because all switching transistors of the primary-side circuit are quickly turned off, and there is at most one switching transistor that is of the switching transistors of the half-bridge circuit and that needs to be turned on to maintain the freewheeling channel, a problem that an impact range is expanded due to a fault or another event can be effectively prevented, and safety of the entire circuit is ensured by stopping sending a PWM driver gating signal.

A key of the control method of stopping sending a PWM driver gating signal according to this embodiment of this application is to identify a switching transistor that is not on a necessary freewheeling channel. The switching transistor that is not on the necessary freewheeling channel may be directly turned off, and a switching transistor that is on the necessary freewheeling channel may be turned off only after the current *i*ᵣ freewheels to approximately zero.

In this embodiment of this application, the topology of the half-bridge circuit shown in FIG. 2a is used as an example. At the moment of the control operation of stopping sending a PWM driver gating signal, for initial statuses of the switching transistors, there may be three, two, or one switching transistor that is in the on state. The direction of the current *i*ᵣ flowing through the inductive device may be positive, negative, or approximately zero. There are a plurality of possible working conditions in total. The following describes, for each working condition and using different embodiments, how to control each switching transistor to be turned off based on the control method of stopping sending a PWM driver gating signal according to this embodiment of this application.

### Embodiment 1

When the power conversion apparatus is faulty or receives the shutdown instruction and needs to perform the control operation of stopping sending a PWM driver gating signal, it is determined that the current *i*ᵣ flowing through the inductive device is greater than or equal to the set negative current threshold *i*_{L} and less than or equal to the set positive current threshold *i*_{H}, that is, *i*_{L}≤*i*ᵣ≤*i*_{H} is satisfied, and the current *i*ᵣ flowing through the inductive device is approximately zero, that is, *i*ᵣ≈0. In this case, all switching transistors in the half-bridge circuit may be immediately turned off without causing a freewheeling problem.

### Embodiment 2

When the power conversion apparatus is faulty or receives the shutdown instruction and needs to perform the control operation of stopping sending a PWM driver gating signal, three switching transistors in the half-bridge circuit are in the on state, and in this case, when it is determined that the current *i*ᵣ flowing through the inductive device is not approximately zero, the following four cases may be classified.

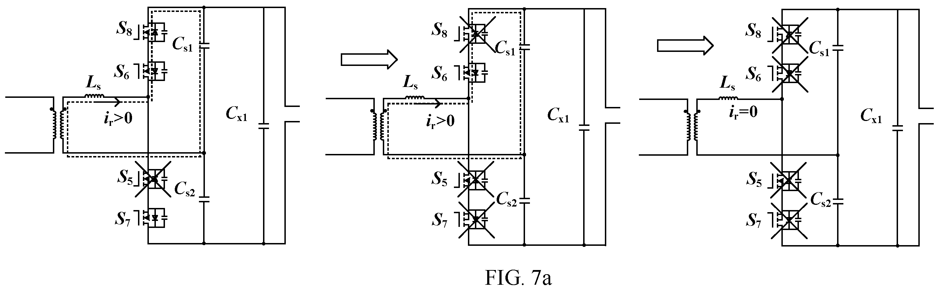

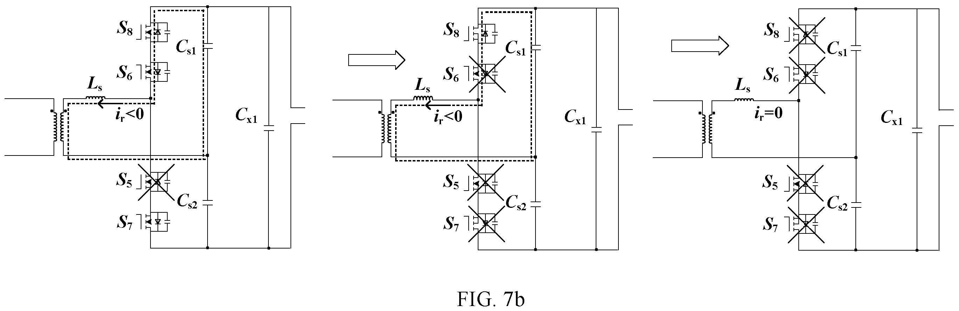

FIG. 7a is an example of a schematic of a turn-off sequence of the switching transistors in the control method of stopping sending a PWM driver gating signal for the power conversion apparatus according to an embodiment of this application. FIG. 7b is an example of a schematic of another turn-off sequence of the switching transistors in the control method of stopping sending a PWM driver gating signal for the power conversion apparatus according to an embodiment of this application.

Case 1: Refer to FIG. 7a and FIG. 7b. In the half-bridge circuit, the eighth switching transistor *S*₈, the sixth switching transistor *S*₆, and the seventh switching transistor *S*₇ are in the on state, and the fifth switching transistor *S*₅ is in an off state. It is determined that the current *i*ᵣ flowing through the inductive device is positive, and the current *i*ᵣ flows along a dashed line in the left figure in FIG. 7a. Because a freewheeling direction of the sixth switching transistor *S*₆ in the on state is opposite to the current direction, as shown in Table 3-1, a control sequence of stopping sending a PWM driver gating signal may be: directly turning off the eighth switching transistor *S*₈ and the seventh switching transistor *S*₇, and turning off the sixth switching transistor *S*₆ after the current *i*ᵣ freewheels to approximately zero.

**Table 3-1**

| *i*ᵣ>0 | Eighth switching transistor *S*₈ | Sixth switching transistor *S*₆ | Fifth switching transistor *S*₅ | Seventh switching transistor *S*₇ |
|---|---|---|---|---|
| Initial status | On | On | Off | On |
| First step | Off | On | Off | Off |
| Second step | Off | Off | Off | Off |

It is determined that the current *i*ᵣ flowing through the inductive device is negative, and the current *i*ᵣ flows along a dashed line in the left figure in FIG. 7b. Because a freewheeling direction of the eighth switching transistor *S*₈ in the on state is opposite to the current direction, as shown in Table 3-2, the control sequence of stopping sending a PWM driver gating signal may be: directly turning off the sixth switching transistor *S*₆ and the seventh switching transistor *S*₇, and turning off the eighth switching transistor *S*₈ after the current *i*ᵣ freewheels to approximately zero.

**Table 3-2**

| *i*ᵣ<0 | Eighth switching transistor *S*₈ | Sixth switching transistor *S*₆ | Fifth switching transistor *S*₅ | Seventh switching transistor *S*₇ |
|---|---|---|---|---|
| Initial status | On | On | Off | On |
| First step | On | Off | Off | Off |
| Second step | Off | Off | Off | Off |

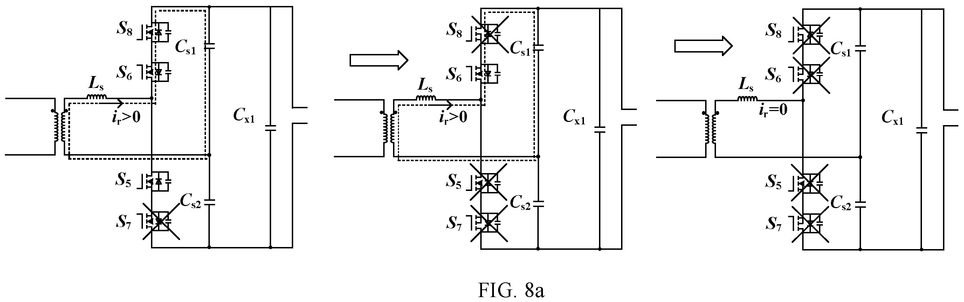

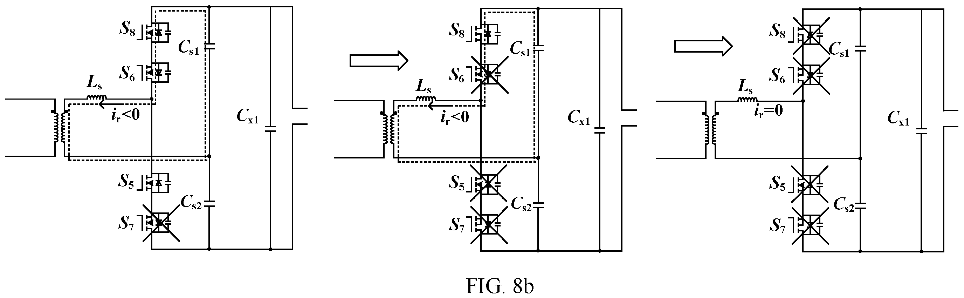

FIG. 8a is an example of a schematic of another turn-off sequence of the switching transistors in the control method of stopping sending a PWM driver gating signal for the power conversion apparatus according to an embodiment of this application. FIG. 8b is an example of a schematic of another turn-off sequence of the switching transistors in the control method of stopping sending a PWM driver gating signal for the power conversion apparatus according to an embodiment of this application.

Case 2: Refer to FIG. 8a and FIG. 8b. In the half-bridge circuit, the eighth switching transistor *S*₈, the sixth switching transistor *S*₆, and the fifth switching transistor *S*₅ are in the on state, and the seventh switching transistor *S*₇ is in the off state. It is determined that the current *i*ᵣ flowing through the inductive device is positive, and the current *i*ᵣ flows along a dashed line in the left figure in FIG. 8a. Because the freewheeling direction of the sixth switching transistor *S*₆ in the on state is opposite to the current direction, as shown in Table 4-1, the control sequence of stopping sending a PWM driver gating signal may be: directly turning off the eighth switching transistor Ss and the fifth switching transistor *S*₅, and turning off the sixth switching transistor *S*₆ after the current *i*ᵣ freewheels to approximately zero.

**Table 4-1**

| *i*ᵣ>0 | Eighth switching transistor *S*₈ | Sixth switching transistor *S*₆ | Fifth switching transistor *S*₅ | Seventh switching transistor *S*₇ |
|---|---|---|---|---|
| Initial status | On | On | On | Off |
| First step | Off | On | Off | Off |
| Second step | Off | Off | Off | Off |

It is determined that the current *i*ᵣ flowing through the inductive device is negative, and the current *i*ᵣ flows along a dashed line in the left figure in FIG. 8b. Because the freewheeling direction of the eighth switching transistor *S*₈ in the on state is opposite to the current direction, as shown in Table 4-2, the control sequence of stopping sending a PWM driver gating signal may be: directly turning off the sixth switching transistor *S*₆ and the fifth switching transistor *S*₅, and turning off the eighth switching transistor *S*₈ after the current *i*ᵣ freewheels to approximately zero.

**Table 4-2**

| *i*ᵣ<0 | Eighth switching transistor *S*₈ | Sixth switching transistor *S*₆ | Fifth switching transistor *S*₅ | Seventh switching transistor *S*₇ |
|---|---|---|---|---|
| Initial status | On | On | On | Off |
| First step | On | Off | Off | Off |
| Second step | Off | Off | Off | Off |

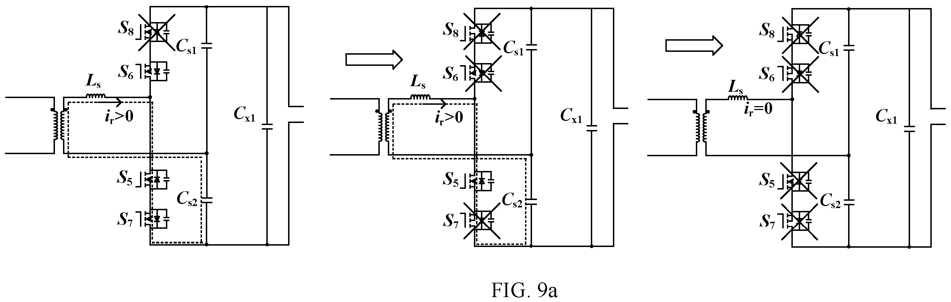

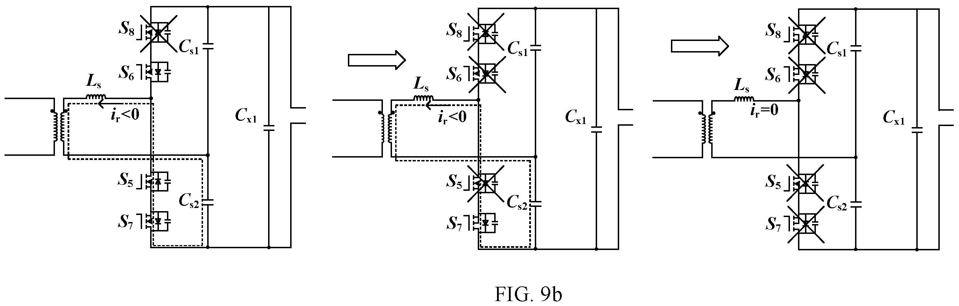

FIG. 9a is an example of a schematic of another turn-off sequence of the switching transistors in the control method of stopping sending a PWM driver gating signal for the power conversion apparatus according to an embodiment of this application. FIG. 9b is an example of a schematic of another turn-off sequence of the switching transistors in the control method of stopping sending a PWM driver gating signal for the power conversion apparatus according to an embodiment of this application.

Case 3: Refer to FIG. 9a and FIG. 9b. In the half-bridge circuit, the seventh switching transistor *S*₇, the sixth switching transistor *S*₆, and the fifth switching transistor *S*₅ are in the on state, and the eighth switching transistor *S*₈ is in the off state. It is determined that the current *i*ᵣ flowing through the inductive device is positive, and the current *i*ᵣ flows along a dashed line in the left figure in FIG. 9a. Because a freewheeling direction of the fifth switching transistor *S*₅ in the on state is opposite to the current direction, as shown in Table 5-1, the control sequence of stopping sending a PWM driver gating signal may be: directly turning off the sixth switching transistor *S*₆ and the seventh switching transistor *S*₇, and turning off the fifth switching transistor *S*₅ after the current *i*ᵣ freewheels to approximately zero.

**Table 5-1**

| *i*ᵣ>0 | Eighth switching transistor *S*₈ | Sixth switching transistor *S*₆ | Fifth switching transistor *S*₅ | Seventh switching transistor *S*₇ |
|---|---|---|---|---|
| Initial status | Off | On | On | On |
| First step | Off | Off | On | Off |
| Second step | Off | Off | Off | Off |

It is determined that the current *i*ᵣ flowing through the inductive device is negative, and the current *i*ᵣ flows along a dashed line in the left figure in FIG. 9b. Because a freewheeling direction of the seventh switching transistor *S*₇ in the on state is opposite to the current direction, as shown in Table 5-2, the control sequence of stopping sending a PWM driver gating signal may be: directly turning off the sixth switching transistor *S*₆ and the fifth switching transistor *S*₅, and turning off the seventh switching transistor *S*₇ after the current *i*ᵣ freewheels to approximately zero.

**Table 5-2**

| *i*ᵣ<0 | Eighth switching transistor *S*₈ | Sixth switching transistor *S*₆ | Fifth switching transistor *S*₅ | Seventh switching transistor *S*₇ |
|---|---|---|---|---|
| Initial status | Off | On | On | On |
| First step | Off | Off | Off | On |
| Second step | Off | Off | Off | Off |

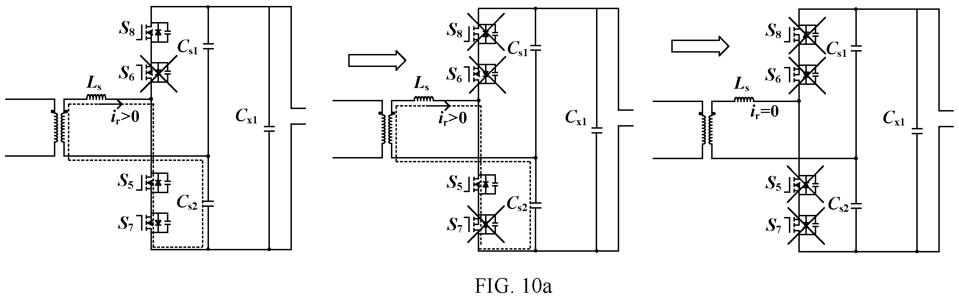

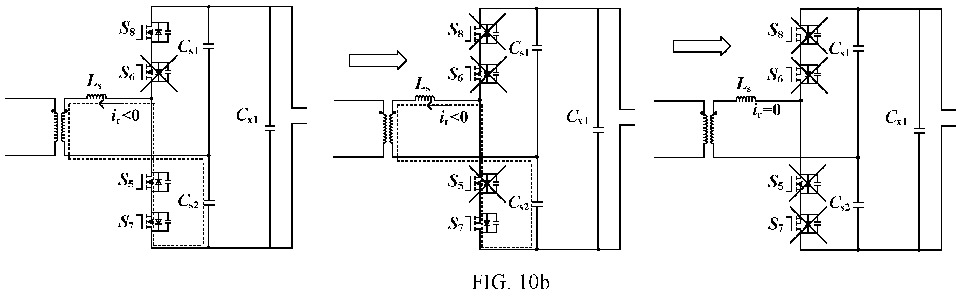

FIG. 10a is an example of a schematic of another turn-off sequence of the switching transistors in the control method of stopping sending a PWM driver gating signal for the power conversion apparatus according to an embodiment of this application. FIG. 10b is an example of a schematic of another turn-off sequence of the switching transistors in the control method of stopping sending a PWM driver gating signal for the power conversion apparatus according to an embodiment of this application.

Case 4: Refer to FIG. 10a and FIG. 10b. In the half-bridge circuit, the seventh switching transistor *S*₇, the eighth switching transistor *S*₈, and the fifth switching transistor *S*₅ are in the on state, and the sixth switching transistor *S*₆ is in the off state. It is determined that the current *i*ᵣ flowing through the inductive device is positive, and the current *i*ᵣ flows along a dashed line in the left figure in FIG. 10a. Because the freewheeling direction of the fifth switching transistor *S*₅ in the on state is opposite to the current direction, as shown in Table 6-1, the control sequence of stopping sending a PWM driver gating signal may be: directly turning off the eighth switching transistor *S*₈ and the seventh switching transistor *S*₇, and turning off the fifth switching transistor *S*₅ after the current *i*ᵣ freewheels to approximately zero.

**Table 6-1**

| *i*ᵣ>0 | Eighth switching transistor *S*₈ | Sixth switching transistor *S*₆ | Fifth switching transistor *S*₅ | Seventh switching transistor *S*₇ |
|---|---|---|---|---|
| Initial status | On | Off | On | On |
| First step | Off | Off | On | Off |
| Second step | Off | Off | Off | Off |

The current *i*ᵣ flows along a dashed line in the left figure in FIG. 10b. Because the freewheeling direction of the seventh switching transistor *S*₇ in the on state is opposite to the current direction, as shown in Table 6-2, the control sequence of stopping sending a PWM driver gating signal may be: directly turning off the eighth switching transistor *S*₈ and the fifth switching transistor *S*₅, and turning off the seventh switching transistor *S*₇ after the current *i*ᵣ freewheels to approximately zero.

**Table 6-2**

| *i*ᵣ<0 | Eighth switching transistor *S*₈ | Sixth switching transistor *S*₆ | Fifth switching transistor *S*₅ | Seventh switching transistor *S*₇ |
|---|---|---|---|---|
| Initial status | On | Off | On | On |
| First step | Off | Off | Off | On |
| Second step | Off | Off | Off | Off |

### Embodiment 3

When the power conversion apparatus is faulty or receives the shutdown instruction and needs to perform the control operation of stopping sending a PWM driver gating signal, two switching transistors in the half-bridge circuit are in the on state, and in this case, when it is determined that the current *i*ᵣ flowing through the inductive device is not approximately zero, the following six cases may be classified.

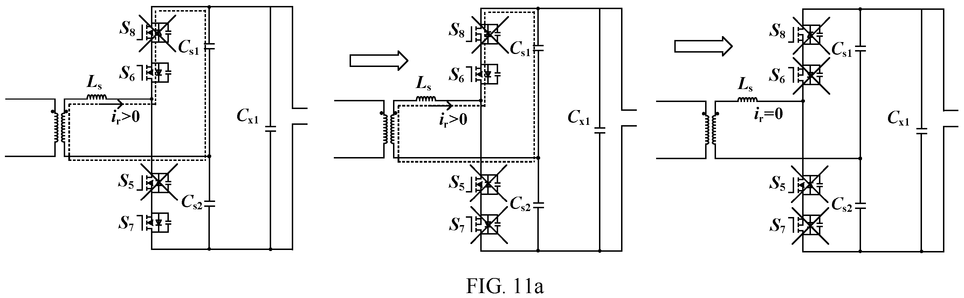

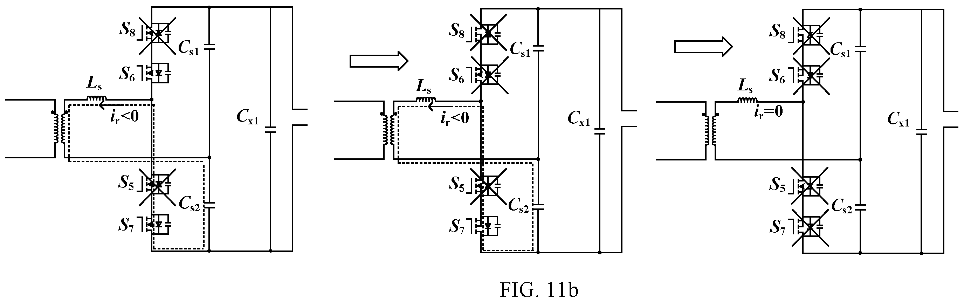

FIG. 11a is an example of a schematic of another turn-off sequence of the switching transistors in the control method of stopping sending a PWM driver gating signal for the power conversion apparatus according to an embodiment of this application. FIG. 11b is an example of a schematic of another turn-off sequence of the switching transistors in the control method of stopping sending a PWM driver gating signal for the power conversion apparatus according to an embodiment of this application.

Case 1: Refer to FIG. 11a and FIG. 11b. In the half-bridge circuit, the sixth switching transistor *S*₆ and the seventh switching transistor *S*₇ are in the on state, and the eighth switching transistor *S*₈ and the fifth switching transistor *S*₅ are in the off state. It is determined that the current *i*ᵣ flowing through the inductive device is positive, and the current *i*ᵣ flows along a dashed line in the left figure in FIG. 11a. Because the freewheeling direction of the sixth switching transistor *S*₆ in the on state is opposite to the current direction, as shown in Table 7-1, the control sequence of stopping sending a PWM driver gating signal may be: directly turning off the seventh switching transistor *S*₇, and turning off the sixth switching transistor *S*₆ after the current *i*ᵣ freewheels to approximately zero.

**Table 7-1**

| *i*ᵣ>0 | Eighth switching transistor *S*₈ | Sixth switching transistor *S*₆ | Fifth switching transistor *S*₅ | Seventh switching transistor *S*₇ |
|---|---|---|---|---|
| Initial status | Off | On | Off | On |
| First step | Off | On | Off | Off |
| Second step | Off | Off | Off | Off |

It is determined that the current *i*ᵣ flowing through the inductive device is negative, and the current *i*ᵣ flows along a dashed line in the left figure in FIG. 11b. Because the freewheeling direction of the seventh switching transistor *S*₇ in the on state is opposite to the current direction, as shown in Table 7-2, the control sequence of stopping sending a PWM driver gating signal may be: directly turning off the sixth switching transistor *S*₆, and turning off the seventh switching transistor *S*₇ after the current *i*ᵣ freewheels to approximately zero.

**Table 7-2**

| *i*ᵣ<0 | Eighth switching transistor *S*₈ | Sixth switching transistor *S*₆ | Fifth switching transistor *S*₅ | Seventh switching transistor *S*₇ |
|---|---|---|---|---|
| Initial status | Off | On | Off | On |
| First step | Off | Off | Off | On |
| Second step | Off | Off | Off | Off |

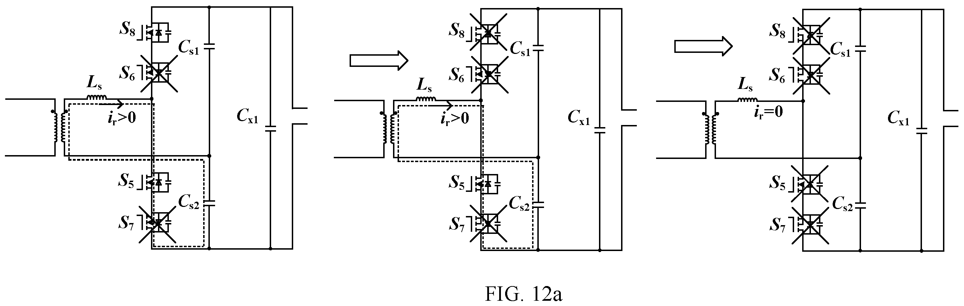

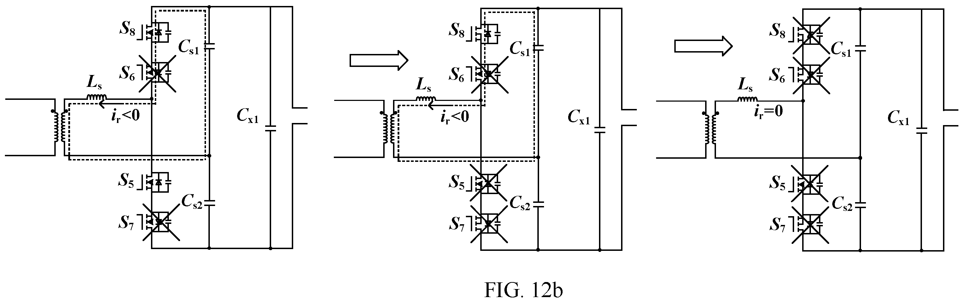

FIG. 12a is an example of a schematic of another turn-off sequence of the switching transistors in the control method of stopping sending a PWM driver gating signal for the power conversion apparatus according to an embodiment of this application. FIG. 12b is an example of a schematic of another turn-off sequence of the switching transistors in the control method of stopping sending a PWM driver gating signal for the power conversion apparatus according to an embodiment of this application.

Case 2: Refer to FIG. 12a and FIG. 12b. In the half-bridge circuit, the eighth switching transistor *S*₈ and the fifth switching transistor *S*₅ are in the on state, and the sixth switching transistor *S*₆ and the seventh switching transistor *S*₇ are in the off state. It is determined that the current *i*ᵣ flowing through the inductive device is positive, and the current *i*ᵣ flows along a dashed line in the left figure in FIG. 12a. Because the freewheeling direction of the fifth switching transistor *S*₅ in the on state is opposite to the current direction, as shown in Table 8-1, the control sequence of stopping sending a PWM driver gating signal may be: directly turning off the eighth switching transistor *S*₈, and turning off the fifth switching transistor *S*₅ after the current *i*ᵣ freewheels to approximately zero.

**Table 8-1**

| *i*ᵣ>0 | Eighth switching transistor *S*₈ | Sixth switching transistor *S*₆ | Fifth switching transistor *S*₅ | Seventh switching transistor *S*₇ |
|---|---|---|---|---|
| Initial status | On | Off | On | Off |
| First step | Off | Off | On | Off |
| Second step | Off | Off | Off | Off |

It is determined that the current *i*ᵣ flowing through the inductive device is negative, and the current *i*ᵣ flows along a dashed line in the left figure in FIG. 12b. Because the freewheeling direction of the eighth switching transistor *S*₈ in the on state is opposite to the current direction, as shown in Table 8-2, the control sequence of stopping sending a PWM driver gating signal may be: directly turning off the fifth switching transistor *S*₅, and turning off the eighth switching transistor S₈ after the current *i*ᵣ freewheels to approximately zero.

**Table 8-2**

| *i*ᵣ<0 | Eighth switching transistor *S*₈ | Sixth switching transistor *S*₆ | Fifth switching transistor *S*₅ | Seventh switching transistor *S*₇ |
|---|---|---|---|---|
| Initial status | On | Off | On | Off |
| First step | On | Off | Off | Off |
| Second step | Off | Off | Off | Off |

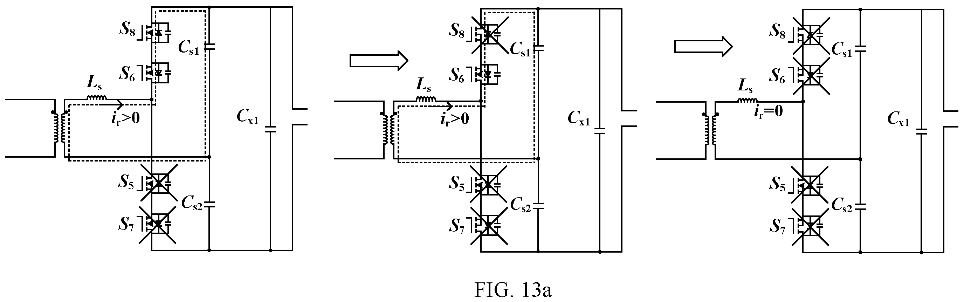

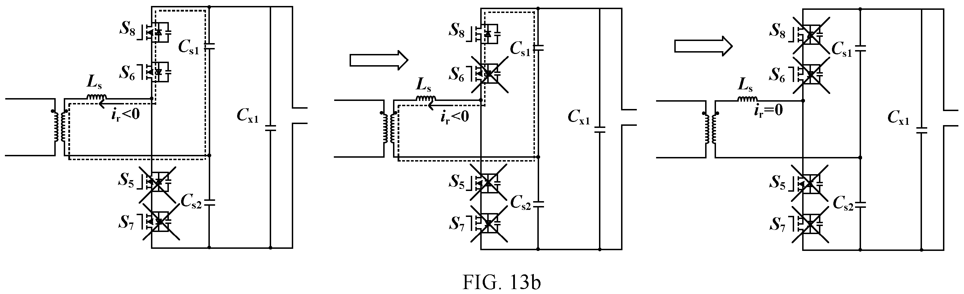

FIG. 13a is an example of a schematic of another turn-off sequence of the switching transistors in the control method of stopping sending a PWM driver gating signal for the power conversion apparatus according to an embodiment of this application. FIG. 13b is an example of a schematic of another turn-off sequence of the switching transistors in the control method of stopping sending a PWM driver gating signal for the power conversion apparatus according to an embodiment of this application.

Case 3: Refer to FIG. 13a and FIG. 13b. In the half-bridge circuit, the eighth switching transistor *S*₈ and the sixth switching transistor *S*₆ are in the on state, and the fifth switching transistor *S*₅ and the seventh switching transistor *S*₇ are in the off state. It is determined that the current *i*ᵣ flowing through the inductive device is positive, and the current *i*ᵣ flows along a dashed line in the left figure in FIG. 13a. Because the freewheeling direction of the sixth switching transistor *S*₆ in the on state is opposite to the current direction, as shown in Table 9-1, the control sequence of stopping sending a PWM driver gating signal may be: directly turning off the eighth switching transistor *S*₈, and turning off the sixth switching transistor *S*₆ after the current *i*ᵣ freewheels to approximately zero.

**Table 9-1**

| *i*ᵣ>0 | Eighth switching transistor *S*₈ | Sixth switching transistor *S*₆ | Fifth switching transistor *S*₅ | Seventh switching transistor *S*₇ |
|---|---|---|---|---|
| Initial status | On | On | Off | Off |
| First step | Off | On | Off | Off |
| Second step | Off | Off | Off | Off |

It is determined that the current *i*ᵣ flowing through the inductive device is negative, and the current *i*ᵣ flows along a dashed line in the left figure in FIG. 13b. Because the freewheeling direction of the eighth switching transistor *S*₈ in the on state is opposite to the current direction, as shown in Table 9-2, the control sequence of stopping sending a PWM driver gating signal may be: directly turning off the sixth switching transistor *S*₆, and turning off the eighth switching transistor S₈ after the current *i*ᵣ freewheels to approximately zero.

**Table 9-2**

| *i*ᵣ<0 | Eighth switching transistor *S*₈ | Sixth switching transistor *S*₆ | Fifth switching transistor *S*₅ | Seventh switching transistor *S*₇ |
|---|---|---|---|---|
| Initial status | On | On | Off | Off |
| First step | On | Off | Off | Off |
| Second step | Off | Off | Off | Off |

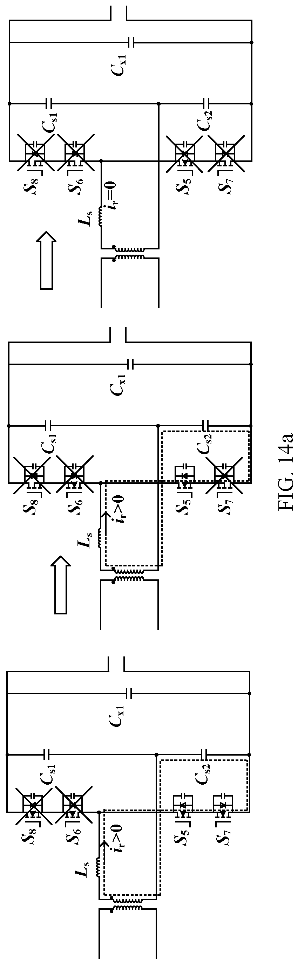

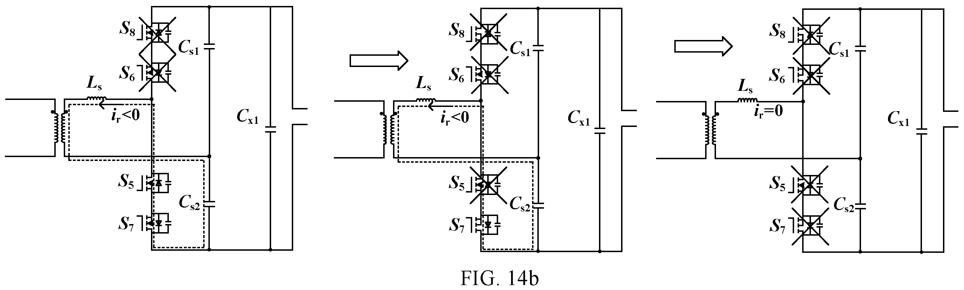

FIG. 14a is an example of a schematic of another turn-off sequence of the switching transistors in the control method of stopping sending a PWM driver gating signal for the power conversion apparatus according to an embodiment of this application. FIG. 14b is an example of a schematic of another turn-off sequence of the switching transistors in the control method of stopping sending a PWM driver gating signal for the power conversion apparatus according to an embodiment of this application.

Case 4: Refer to FIG. 14a and FIG. 14b. In the half-bridge circuit, the fifth switching transistor *S*₅ and the seventh switching transistor *S*₇ are in the on state, and the eighth switching transistor *S*₈ and the sixth switching transistor *S*₆ are in the off state. It is determined that the current *i*ᵣ flowing through the inductive device is positive, and the current *i*ᵣ flows along a dashed line in the left figure in FIG. 14a. Because the freewheeling direction of the fifth switching transistor *S*₅ in the on state is opposite to the current direction, as shown in Table 10-1, the control sequence of stopping sending a PWM driver gating signal may be: directly turning off the seventh switching transistor *S*₇, and turning off the fifth switching transistor *S*₅ after the current *i*ᵣ freewheels to approximately zero.

**Table 10-1**

| *i*ᵣ>0 | Eighth switching transistor *S*₈ | Sixth switching transistor *S*₆ | Fifth switching transistor *S*₅ | Seventh switching transistor *S*₇ |
|---|---|---|---|---|
| Initial status | Off | Off | On | On |
| First step | Off | Off | On | Off |
| Second step | Off | Off | Off | Off |

It is determined that the current *i*ᵣ flowing through the inductive device is negative, and the current *i*ᵣ flows along a dashed line in the left figure in FIG. 14b. Because the freewheeling direction of the seventh switching transistor *S*₇ in the on state is opposite to the current direction, as shown in Table 10-2, the control sequence of stopping sending a PWM driver gating signal may be: directly turning off the fifth switching transistor *S*₅, and turning off the seventh switching transistor *S*₇ after the current *i*ᵣ freewheels to approximately zero.

**Table 10-2**

| *i*ᵣ<0 | Eighth switching transistor *S*₈ | Sixth switching transistor *S*₆ | Fifth switching transistor *S*₅ | Seventh switching transistor *S*₇ |
|---|---|---|---|---|
| Initial status | Off | Off | On | On |
| First step | Off | Off | Off | On |
| Second step | Off | Off | Off | Off |

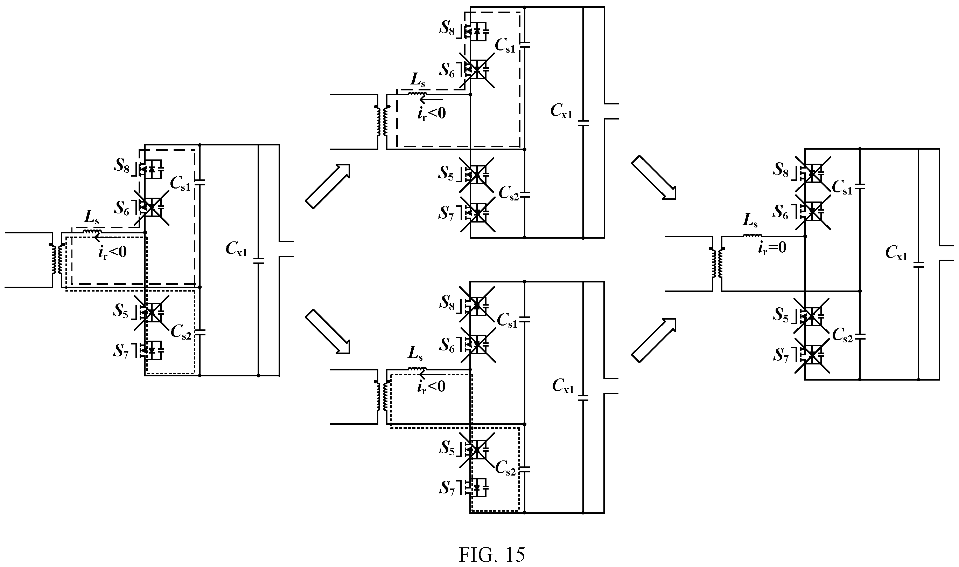

FIG. 15 is an example of a schematic of another turn-off sequence of the switching transistors in the control method of stopping sending a PWM driver gating signal for the power conversion apparatus according to an embodiment of this application.

Case 5: Refer to FIG. 15. In the half-bridge circuit, the eighth switching transistor Ss and the seventh switching transistor *S*₇ are in the on state, and the fifth switching transistor *S*₅ and the sixth switching transistor *S*₆ are in the off state. In this case, the current *i*ᵣ flowing through the inductive device is definitely negative, and the current *i*ᵣ may flow along the two dashed lines in the left figure of FIG. 15. Because the freewheeling directions of the eighth switching transistor *S*₈ and the seventh switching transistor *S*₇ in the on state are opposite to the current direction, as shown in Table 11-1, the control sequence of stopping sending a PWM driver gating signal may be: directly turning off the seventh switching transistor *S*₇, and turning off the eighth switching transistor *S*₈ after the current *i*ᵣ freewheels to approximately zero. Alternatively, as shown in Table 11-2, the control sequence of stopping sending a PWM driver gating signal may be: directly turning off the eighth switching transistor *S₈* directly, and turning off the seventh switching transistor *S*₇ after the current *i*ᵣ freewheels to approximately zero.

**Table 11-1**

| *i*ᵣ>0 | Eighth switching transistor *S*₈ | Sixth switching transistor *S*₆ | Fifth switching transistor *S*₅ | Seventh switching transistor *S*₇ |
|---|---|---|---|---|
| Initial status | On | Off | Off | On |
| First step | On | Off | Off | Off |
| Second step | Off | Off | Off | Off |

**Table 11-2**

| *i*ᵣ<0 | Eighth switching transistor *S*₈ | Sixth switching transistor *S*₆ | Fifth switching transistor *S*₅ | Seventh switching transistor *S*₇ |
|---|---|---|---|---|
| Initial status | On | Off | Off | On |
| First step | Off | Off | Off | On |
| Second step | Off | Off | Off | Off |

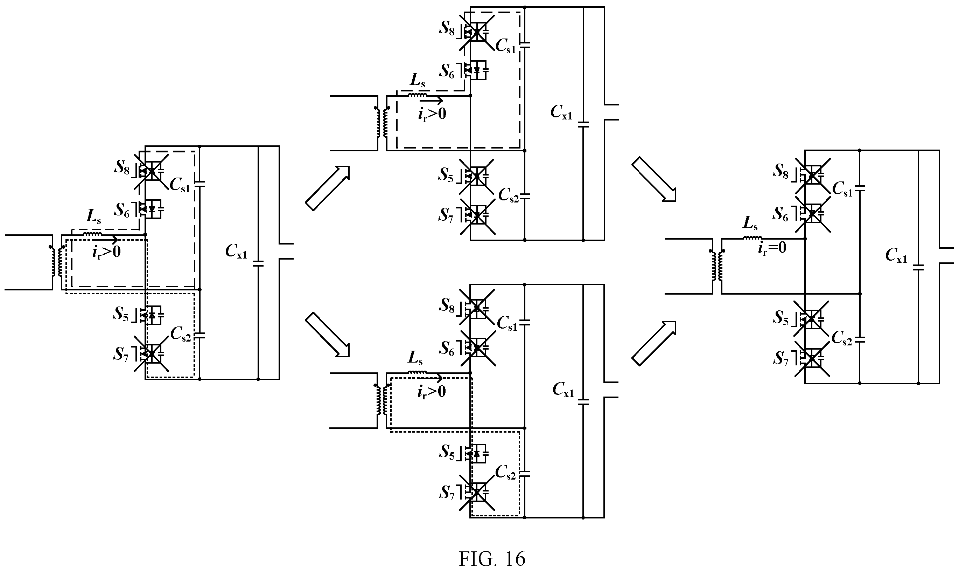

FIG. 16 is an example of a schematic of another turn-off sequence of the switching transistors in the control method of stopping sending a PWM driver gating signal for the power conversion apparatus according to an embodiment of this application.

Case 6: Refer to FIG. 16. In the half-bridge circuit, the fifth switching transistor *S*₅ and the sixth switching transistor *S*₆ are in the on state, and the eighth switching transistor *S*₈ and the seventh switching transistor *S*₇ are in the off state. In this case, the current *i*ᵣ flowing through the inductive device is definitely positive, and the current *i*ᵣ may flow along two dashed lines in the left figure of FIG. 16. Because the freewheeling directions of the fifth switching transistor *S*₅ and the sixth switching transistor *S*₆ in the on state are opposite to the current direction, as shown in Table 12-1, the control sequence of stopping sending a PWM driver gating signal may be: directly turning off the fifth switching transistor *S*₅, and turning off the sixth switching transistor *S*₆ after the current *i*ᵣ freewheels to approximately zero. Alternatively, as shown in Table 12-2, the control sequence of stopping sending a PWM driver gating signal may be: directly turning off the sixth switching transistor *S*₆ directly, and turning off the fifth switching transistor *S*₅ after the current *i*ᵣ freewheels to approximately zero.

**Table 12-1**

| *i*ᵣ>0 | Eighth switching transistor *S*₈ | Sixth switching transistor *S*₆ | Fifth switching transistor *S*₅ | Seventh switching transistor *S*₇ |
|---|---|---|---|---|
| Initial status | Off | On | On | Off |
| First step | Off | On | Off | Off |
| Second step | Off | Off | Off | Off |

**Table 12-2**

| *i*ᵣ<0 | Eighth switching transistor *S*₈ | Sixth switching transistor *S*₆ | Fifth switching transistor *S*₅ | Seventh switching transistor *S*₇ |
|---|---|---|---|---|
| Initial status | Off | On | On | Off |
| First step | Off | Off | On | Off |
| Second step | Off | Off | Off | Off |

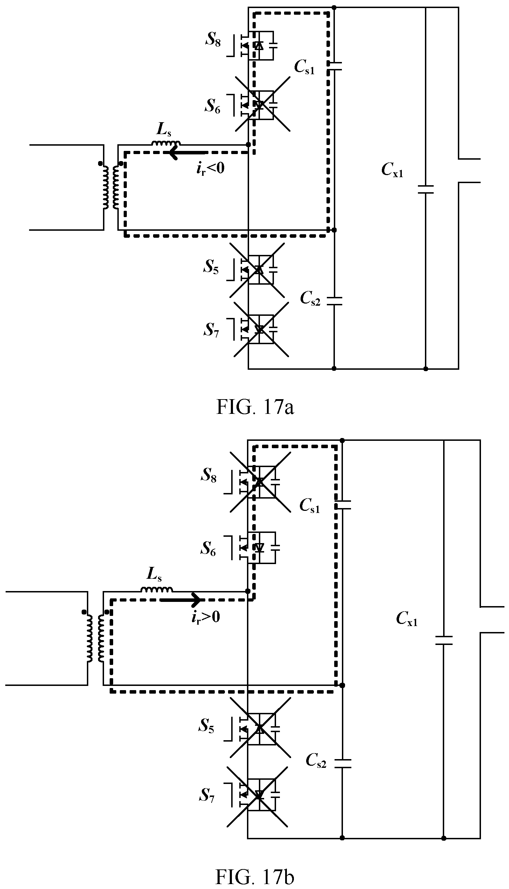

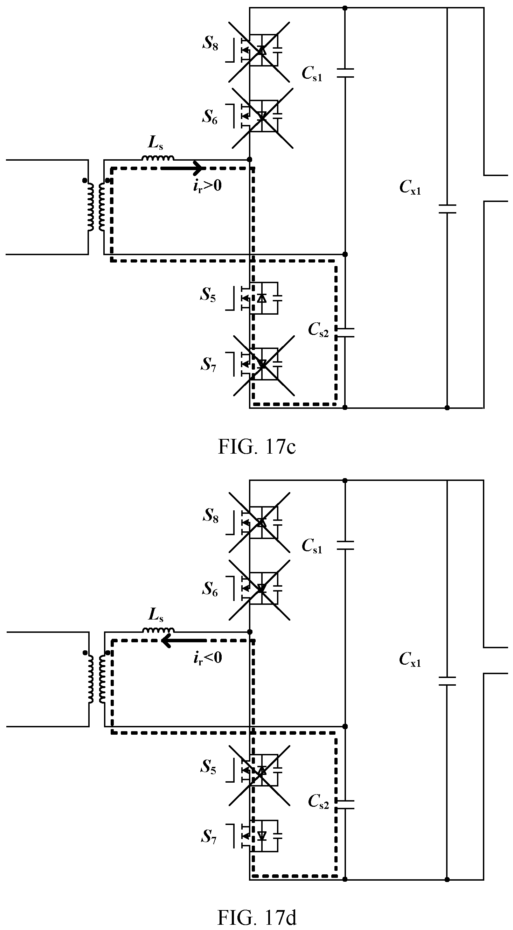

FIG. 17a is an example of a schematic of another turn-off sequence of the switching transistors in the control method of stopping sending a PWM driver gating signal for the power conversion apparatus according to an embodiment of this application. FIG. 17b is an example of a schematic of another turn-off sequence of the switching transistors in the control method of stopping sending a PWM driver gating signal for the power conversion apparatus according to an embodiment of this application. FIG. 17c is an example of a schematic of another turn-off sequence of the switching transistors in the control method of stopping sending a PWM driver gating signal for the power conversion apparatus according to an embodiment of this application. FIG. 17d is an example of a schematic of another turn-off sequence of the switching transistors in the control method of stopping sending a PWM driver gating signal for the power conversion apparatus according to an embodiment of this application.

### Embodiment 4

When the power conversion apparatus is faulty or receives the shutdown instruction and needs to perform the control operation of stopping sending a PWM driver gating signal, only one switching transistor in the half-bridge circuit is in the on state, and in this case, when it is determined that the current *i*ᵣ flowing through the inductive device is not approximately zero, the following four cases may be classified.

Case 1: Refer to FIG. 17a. In the half-bridge circuit, the eighth switching transistor *S*₈ is in the on state, and the fifth switching transistor *S*₅, the sixth switching transistor *S*₆, and the seventh switching transistor *S*₇ are in the off state. Case 2: Refer to FIG. 17b. In the half-bridge circuit, the sixth switching transistor *S*₆ is in the on state, and the fifth switching transistor *S*₅, the eighth switching transistor *S*₈, and the seventh switching transistor *S*₇ are in the off state. Case 3: Refer to FIG. 17c. In the half-bridge circuit, the fifth switching transistor *S*₅ is in the on state, and the eighth switching transistor *S*₈, the sixth switching transistor *S*₆, and the seventh switching transistor *S*₇ are in the off state. Case 4: Refer to FIG. 17d. In the half-bridge circuit, the seventh switching transistor *S*₇ is in the on state, and the fifth switching transistor *S*₅, the sixth switching transistor *S*₆, and the eighth switching transistor *S*₈ are in the off state.

In any of the foregoing cases, for the direction of the current *i*ᵣ flowing through the inductive device, there is only one possibility, and a turned-on switching transistor is definitely a necessary condition for current freewheeling. Therefore, the switching transistor in the turned-on state can be turned off only after the current *i*ᵣ freewheels to approximately zero.

The foregoing describes in detail, by using the half-bridge circuit shown in FIG. 2a as an example, the sequence of controlling the switching transistors to be turned off based on the control method of stopping sending a PWM driver gating signal according to this embodiment of this application in several working conditions. The control method of stopping sending a PWM driver gating signal for the half-bridge circuit shown in FIG. 2b and FIG. 2c is similar, and details are not described herein again.

It is clear that a person skilled in the art can make various modifications and variations to this application without departing from the protection scope of this application. This application is intended to cover these modifications and variations of this application provided that they fall within the scope defined by the claims of this application and their equivalent technologies.

## Claims

1. A power conversion apparatus, comprising a transformer, an inductive device, a primary-side circuit, a secondary-side circuit, and a controller, wherein
the primary-side circuit is connected to a primary-side winding of the transformer, and the secondary-side circuit is connected to the inductive device in series and is then connected to a secondary-side winding of the transformer;
the secondary-side circuit comprises a half-bridge circuit, the half-bridge circuit comprises a bridge arm and a first capacitor, the bridge arm comprises an upper half bridge arm and a lower half bridge arm, the upper half bridge arm or the lower half bridge arm comprises two switching transistors whose freewheeling directions are opposite, a connection point between the upper half bridge arm and the lower half bridge arm is connected to one end of the secondary-side winding of the transformer through the inductive device, and the first capacitor is connected between the upper half bridge arm or the lower half bridge arm and the other end of the secondary-side winding of the transformer; and
the controller is configured to: in response to that the power conversion apparatus is faulty or receives a shutdown instruction, and a current flowing through the inductive device is greater than or equal to a set negative current threshold and less than or equal to a set positive current threshold, control all switching transistors in an on state in the upper half bridge arm and the lower half bridge arm to be simultaneously turned off, so that all switching transistors in the half-bridge circuit of the power conversion apparatus are turned off; or
the controller is configured to: in response to that the power conversion apparatus is faulty or receives a shutdown instruction, and a current flowing through the inductive device is less than a set negative current threshold or greater than a set positive current threshold, control a part of switching transistors in the upper half bridge arm or the lower half bridge arm that is turned on to be turned off, and control all switching transistors in the lower half bridge arm or the upper half bridge arm that is turned off to be turned off; and then in response to that the current flowing through the inductive device is greater than or equal to the set negative current threshold and less than or equal to the set positive current threshold, control all switching transistors of the upper half bridge arm or the lower half bridge arm that is turned on to be turned off, so that all switching transistors in the half-bridge circuit of the power conversion apparatus are turned off.

2. The power conversion apparatus according to claim 1, wherein the half-bridge circuit further comprises a second capacitor, the first capacitor and the second capacitor are connected in series and then are connected in parallel to the bridge arm, and a connection point between the first capacitor and the second capacitor is connected to the other end of the secondary-side winding of the transformer.

3. The power conversion apparatus according to claim 1 or 2, wherein the upper half bridge arm comprises a sixth switching transistor and an eighth switching transistor, and the lower half bridge arm comprises a fifth switching transistor and a seventh switching transistor, wherein
freewheeling directions of the fifth switching transistor and the sixth switching transistor both point to the connection point between the upper half bridge arm and the lower half bridge arm; and
freewheeling directions of the seventh switching transistor and the eighth switching transistor are both away from the connection point between the upper half bridge arm and the lower half bridge arm.

4. The power conversion apparatus according to claim 3, wherein the sixth switching transistor is connected between the eighth switching transistor and the inductive device, or the eighth switching transistor is connected between the sixth switching transistor and the inductive device; and
the fifth switching transistor is connected between the seventh switching transistor and the inductive device, or the seventh switching transistor is connected between the fifth switching transistor and the inductive device.

5. The power conversion apparatus according to claim 3 or 4, wherein in response to that the current flowing through the inductive device is greater than or equal to the set negative current threshold and less than or equal to the set positive current threshold,
the controller is configured to control the fifth switching transistor, the sixth switching transistor, the seventh switching transistor, and the eighth switching transistor to be simultaneously turned off.

6. The power conversion apparatus according to claim 3 or 4, wherein in response to that the current flowing through the inductive device is greater than the set positive current threshold,
the controller is configured to: control the sixth switching transistor to remain on; control other switching transistors in the half-bridge circuit to be turned off; and then in response to that the current flowing through the inductive device is greater than or equal to the set negative current threshold and less than or equal to the set positive current threshold, control the sixth switching transistor to be turned off.

7. The power conversion apparatus according to claim 3 or 4, wherein in response to that the current flowing through the inductive device is greater than the set positive current threshold,
the controller is configured to: control the fifth switching transistor to remain on; control other switching transistors in the half-bridge circuit to be turned off; and then in response to that the current flowing through the inductive device is greater than or equal to the set negative current threshold and less than or equal to the set positive current threshold, control the fifth switching transistor to be turned off.

8. The power conversion apparatus according to claim 3 or 4, wherein in response to that the current flowing through the inductive device is less than the set negative current threshold,
the controller is configured to: control the eighth switching transistor to remain on; control other switching transistors in the half-bridge circuit to be turned off; and then in response to that the current flowing through the inductive device is greater than or equal to the set negative current threshold and less than or equal to the set positive current threshold, control the eighth switching transistor to be turned off.

9. The power conversion apparatus according to claim 3 or 4, wherein in response to that the current flowing through the inductive device is less than the set negative current threshold,
the controller is configured to: control the seventh switching transistor to remain on; control other switching transistors in the half-bridge circuit to be turned off; and then in response to that the current flowing through the inductive device is greater than or equal to the set negative current threshold and less than or equal to the set positive current threshold, control the seventh switching transistor to be turned off.

10. A control method of stopping sending a PWM driver gating signal for a power conversion apparatus, wherein the control method of stopping sending a PWM driver gating signal comprises:
in response to that the power conversion apparatus is faulty or receives a shutdown instruction, and a current flowing through an inductive device is greater than or equal to a set negative current threshold and less than or equal to a set positive current threshold, controlling all switching transistors in an on state in an upper half bridge arm and a lower half bridge arm to be simultaneously turned off, so that all switching transistors in a half-bridge circuit of the power conversion apparatus are turned off; or
in response to that the power conversion apparatus is faulty or receives a shutdown instruction, and a current flowing through an inductive device is less than a set negative current threshold or greater than a set positive current threshold, controlling a part of switching transistors in an upper half bridge arm or a lower half bridge arm that is turned on to be turned off, and controlling all switching transistors in the lower half bridge arm or the upper half bridge arm that is turned off to be turned off; and then in response to that the current flowing through the inductive device is greater than or equal to the set negative current threshold and less than or equal to the set positive current threshold, controlling all switching transistors of the upper half bridge arm or the lower half bridge arm that is turned on to be turned off, so that all switching transistors in a half-bridge circuit of the power conversion apparatus are turned off.

11. The control method according to claim 10, wherein the upper half bridge arm comprises a sixth switching transistor and an eighth switching transistor, and the lower half bridge arm comprises a fifth switching transistor and a seventh switching transistor, wherein
freewheeling directions of the fifth switching transistor and the sixth switching transistor both point to the connection point between the upper half bridge arm and the lower half bridge arm; and
freewheeling directions of the seventh switching transistor and the eighth switching transistor are both away from the connection point between the upper half bridge arm and the lower half bridge arm.

12. The control method according to claim 11, wherein in response to that the current flowing through the inductive device is greater than or equal to the set negative current threshold and less than or equal to the set positive current threshold,
the controller is configured to control the fifth switching transistor, the sixth switching transistor, the seventh switching transistor, and the eighth switching transistor to be simultaneously turned off.

13. The control method according to claim 11, wherein in response to that the current flowing through the inductive device is greater than the set positive current threshold,
the controller is configured to: control the sixth switching transistor to remain on; control other switching transistors in the half-bridge circuit to be turned off; and then in response to that the current flowing through the inductive device is greater than or equal to the set negative current threshold and less than or equal to the set positive current threshold, control the sixth switching transistor to be turned off.

14. The control method according to claim 11, wherein in response to that the current flowing through the inductive device is greater than the set positive current threshold,
the controller is configured to: control the fifth switching transistor to remain on; control other switching transistors in the half-bridge circuit to be turned off; and then in response to that the current flowing through the inductive device is greater than or equal to the set negative current threshold and less than or equal to the set positive current threshold, control the fifth switching transistor to be turned off.

15. The control method according to claim 11, wherein in response to that the current flowing through the inductive device is less than the set negative current threshold,
the controller is configured to: control the eighth switching transistor to remain on; control other switching transistors in the half-bridge circuit to be turned off; and then in response to that the current flowing through the inductive device is greater than or equal to the set negative current threshold and less than or equal to the set positive current threshold, control the eighth switching transistor to be turned off.
